# EUROPÄISCHE PATENTSCHRIFT

(11) **EP 3 145 964 B1**
(45) Veröffentlichungstag und Bekanntmachung des Hinweises auf die Patenterteilung: **18.07.2018**
(21) Anmeldenummer: 15741845.0
(22) Anmeldetag: 26.03.2015
(51) Int. Cl.: C08F 26/02, C08L 23/24

(54) **HAFTVERMITTLER FÜR WÄSSRIGE BESCHICHTUNGSZUSAMMENSETZUNGEN**
ADHESION PROMOTER FOR AQUEOUS COATING COMPOSITIONS
AGENT ADHÉSIF POUR COMPOSITIONS DE REVÊTEMENT AQUEUSES

(30) Priorität: 20.05.2014 EP 14169112
(43) Veröffentlichungstag der Anmeldung: 29.03.2017
(73) Patentinhaber: BASF Coatings GmbH, 48165 Münster (DE)
(72) Erfinder: CORTEN, Cathrin, 59423 Unna (DE); ANDERSEN, Audree, 48329 Havixbeck (DE); SAEDLER, Markus, 48163 Münster (DE); BOSHE-PLOIS, Stefanie, 48607 Ochtrup (DE); FÖLLING, Frederik, 48165 Münster (DE); MISSKE, Andrea, 67346 Speyer (DE)
(74) Vertreter: BASF IP Association
(86) Internationale Anmeldenummer: PCT/EP2015/056555
(87) Internationale Veröffentlichungsnummer: WO 2015/176854

(56) Entgegenhaltungen:
- US-A1- 2011 218 295

## Beschreibung

Die vorliegende Erfindung betrifft ein durch Copolymerisation von wenigstens drei jeweils voneinander verschiedenen ethylenisch ungesättigten Monomeren erhältliches Copolymer, wobei das Copolymer wenigstens drei voneinander verschiedene Struktureinheiten (S1) und (S2) sowie (S3) aufweist, eine Verwendung dieses Copolymeren als Haftungs-vermittelndes Additiv in einer wässrigen Beschichtungszusammensetzung, eine wässrige Beschichtungszusammensetzung umfassend wenigstens ein polymeres Harz (A1), wenigstens ein Pigment (B) und wenigstens ein erfindungsgemäßes, als Haftungs-vermittelndes Additiv eingesetztes Copolymer als Komponente (C) sowie Verfahren zur zumindest teilweisen Beschichtung eines Substrats mit einer Basislackschicht und zur zumindest teilweisen Beschichtung eines Substrats mit einer Mehrschichtlackierung.

Kunststoffe haben sich im Rahmen der Fahrzeuglackierung als Materialien für Fahrzeugteile, Fahrzeuganbauteile und Fahrzeugzubehörteile sowohl im Innen- als auch im Außenbereich durchgesetzt. Kunststoffe werden ebenso wie andere Werkstoffe aus dekorativen Gründen (beispielsweise Farbgebung) und/oder aufgrund technischer Zweckmäßigkeit (beispielsweise Licht- und Wetterbeständigkeit) mit entsprechenden geeigneten Beschichtungszusammensetzungen beschichtet und damit lackiert. Eine wichtige Voraussetzung für eine qualitativ hochwertige Beschichtung ist deren Haftung zum Untergrund oder zur darunter liegenden Schicht, insbesondere zur darunter liegenden Substratoberfläche. Es ist allgemein bekannt, dass gerade bei der Beschichtung beziehungsweise Lackierung von Kunststoffen große Haftungsprobleme zum Kunststoffuntergrund auftreten können. Um eine akzeptable Haftung der jeweiligen Beschichtung auf dem Untergrund zu erreichen, werden solche Kunststoffe üblicherweise einer oberflächenaktivierenden Vorbehandlung unterworfen. Die am häufigsten angewendeten Verfahren sind das Beflammen, die Plasmabehandlung und die Corona-Entladung.

Ebenso ist es bekannt, zur Haftungsverbesserung haftungsvermittelnde bzw. haftungsverstärkende Verbindungen, insbesondere chlorierte Polyolefine, einzusetzen. Der Einsatz solcher chlorierter Polyolefine ist jedoch unter ökologischen Gesichtspunkten sehr bedenklich und damit nachteilig.

Der Einsatz derartiger haftungsvermittelnder Verbindungen erfolgt üblicherweise durch Aufragen einer Primerschicht, welche die haftungsvermittelnden Verbindungen enthält, (Haftprimer) in einem separaten Beschichtungsvorgang vor der eigentlichen Beschichtung auf das Kunststoffsubstrat. Beim Einsatz wässriger Beschichtungszusammensetzungen zur Beschichtung von Kunststoffsubstraten, die sich aus ökologischen Gesichtspunkten auch in der Kunststoffbeschichtung immer mehr durchsetzen, sind die Haftungsprobleme zwischen Kunststoffsubstrat und Beschichtung üblicherweise besonders ausgeprägt.

Insbesondere problematisch ist die Beschichtung von Polyolefinen wie Polyethylen und Polypropylen, mit Ethylen-Propylen-Dien-Mischpolymeren modifiziertem Polypropylen (PP-EPDM) oder mit Ethylen-Butylen-Dien-Mischpolymeren modifiziertem Polypropylen (PP-EBDM) sowie mit Polybutadienterephthalat modifiziertem Polycarbonat (PC-PBT) und Polyurethan (PUR-RIM) als zu beschichtende Kunststoffsubstrate. Insbesondere Substrate aus oder basierend auf PP-EPDM können üblicherweise nur nach einer Vorbehandlung der Substratoberfläche durch Beflammen und nach anschließendem Auftrag eines Haftprimers auf die so vorbehandelte Substratoberfläche beschichtet werden.

Nachteilig an dieser konventionellen Vorgehensweise ist, dass es - insbesondere im Fall von Substraten aus oder basierend auf PP-EPDM - somit erforderlich ist, vor der eigentlichen Beschichtung, mittels derer die dekorative und/oder technische Wirkung erzielt werden soll, einen Haftprimer auf die Substratoberfläche aufzutragen und/oder eine Vorbehandlung durchzuführen. Hierfür ist jeweils ein separater Verfahrensschritt erforderlich, der jedoch aus ökonomischen Gründen, insbesondere aufgrund eines höheren Zeit- und Kostenaufwandes, unerwünscht ist.

Es besteht daher ein Bedarf an einer wässrigen Beschichtungszusammensetzung, die zur Herstellung einer Basislackschicht auf der Oberfläche eines Substrats, insbesondere Kunststoffsubstrats, geeignet ist und die zudem eine gute Haftung der Basislackschicht zu der darunterliegenden Substratoberfläche und gegebenenfalls zudem zu einer gegebenenfalls darüber liegenden weiteren Schicht wie einer Klarlackschicht ohne eine vorherige Beschichtung des Substrats mit einem Haftprimer und/oder ohne eine Vorbehandlung des Substrats ermöglicht, und zudem zumindest in gleichem Maße dazu geeignet ist, die gewünschte dekorative und/oder technische Wirkung zu erzielen, die auch mit üblichen Beschichtungszusammensetzungen erzielt werden kann. Zudem besteht ein Bedarf an solchen Beschichtungszusammensetzungen, die es ermöglichen, auf den Einsatz von chlorierten Polyolefinen als haftvermittelnden Verbindungen zu verzichten.

Eine Aufgabe der vorliegenden Erfindung ist es daher, eine Beschichtungszusammensetzung zur zumindest teilweisen Beschichtung eines Substrats, vorzugsweise eines Substrats aus oder basierend auf wenigstens einem Kunststoff wie beispielsweise PP-EPDM, mit einer Basislackschicht zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, eine solche Beschichtungszusammensetzung zur Verfügung zu stellen, die ein ökologischeres und ökonomischeres Beschichtungsverfahren als herkömmliche eingesetzte Beschichtungszusammensetzungen ermöglicht, d.h. welche es insbesondere ermöglicht, auf den Einsatz von lösemittel-basierten Beschichtungszusammensetzungen zu verzichten, aber mit welcher dennoch die zumindest gleiche und insbesondere eine verbesserte Haftung zu der darunterliegenden Substratoberfläche und gegebenenfalls zudem zu einer gegebenenfalls darüber liegenden weiteren Schicht erzielt werden kann, ohne dabei jedoch eine vorherige Beschichtung des Substrats mit einem Haftprimer durchführen zu müssen und/oder ohne dabei auf den Einsatz von chlorierten Polyolefinen als haftvermittelnde Verbindungen zurückgreifen zu müssen und/oder ohne eine Vorbehandlung des Substrats durchführen zu müssen.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein durch Copolymerisation von wenigstens drei jeweils voneinander verschiedenen ethylenisch ungesättigten Monomeren erhältliches Copolymer, dadurch gekennzeichnet, dass
das Copolymer wenigstens drei voneinander verschiedene Struktureinheiten (S1) und (S2) und (S3) aufweist, wobei
jede Struktureinheit (S1) wenigstens eine verzweigte Alkyl-Gruppe mit wenigstens 11, vorzugsweise wenigstens 13, Kohlenstoffatomen aufweist,
jede Struktureinheit (S2) wenigstens eine über eine C₁₋₁₀-Alkylen-Gruppe gebundene Harnstoff-Gruppe der allgemeinen Formel (I) aufweist 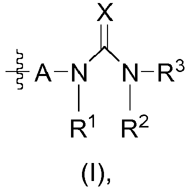 worin
X für O oder S, vorzugsweise für O, steht,
A für eine C₁₋₁₀-Alkylen-Gruppe steht und
R¹, R² und R³ jeweils unabhängig voneinander für H oder einen C₁₋₁₀-Alkyl-Rest stehen oder
R¹ und R² gemeinsam für -(CR⁴R⁵)ₙ- stehen und R³ eine der vorstehenden Bedeutungen hat, wobei R⁴ und R⁵ jeweils unabhängig voneinander für H oder einen C₁₋₆-Alkyl-Rest stehen und der Parameter n für eine ganze Zahl im Bereich von 2 bis 5, vorzugsweise für 2 oder 3 steht,
und jede Struktureinheit (S3) wenigstens eine funktionelle Gruppe ausgewählt aus der Gruppe bestehend aus Carboxyl-Gruppen, Hydroxyl-Gruppen, Thiol-Gruppen, Amino-Gruppen und Epoxid-Gruppen und Mischungen davon, vorzugsweise ausgewählt aus der Gruppe bestehend aus Carboxyl-Gruppen und Hydroxyl-Gruppen und Mischungen davon, aufweist.

Ein weiterer Gegenstand der vorliegenden Erfindung ist eine Verwendung dieses erfindungsgemäßen Copolymeren als Haftungs-vermittelndes Additiv in einer wässrigen Beschichtungszusammensetzung, die zur zumindest teilweisen Beschichtung eines Substrats, vorzugsweise eines Substrats aus oder basierend auf wenigstens einem Kunststoff, mit einer Basislackschicht geeignet ist.

Ein weiterer Gegenstand der vorliegenden Erfindung ist eine wässrige Beschichtungszusammensetzung umfassend
wenigstens ein polymeres Harz (A1) und gegebenenfalls wenigstens ein Vernetzungsmittel (A2),
wenigstens ein Pigment (B) und
wenigstens ein von dem polymeren Harz (A1) verschiedenes und als Haftungs-vermittelndes Additiv eingesetztes erfindungsgemäßes Copolymer als Komponente (C), d.h. des durch Copolymerisation von wenigstens drei voneinander verschiedenen ethylenisch ungesättigten Monomeren erhältlichen erfindungsgemäßen Copolymeren, welches dadurch gekennzeichnet ist, dass
das Copolymer wenigstens drei voneinander verschiedene Struktureinheiten (S1) und (S2) und (S3) aufweist, wobei
jede Struktureinheit (S1) wenigstens eine verzweigte Alkyl-Gruppe mit wenigstens 11, vorzugsweise wenigstens 13, Kohlenstoffatomen aufweist,
jede Struktureinheit (S2) wenigstens eine über eine C₁₋₁₀-Alkylen-Gruppe gebundene Harnstoff-Gruppe der allgemeinen Formel (I) aufweist 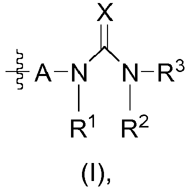 worin
   X für O oder S, vorzugsweise für O, steht,
   A für eine C₁₋₁₀-Alkylen-Gruppe steht und
   R¹, R² und R³ jeweils unabhängig voneinander für H oder einen C₁₋₁₀-Alkyl-Rest stehen oder
   R¹ und R² gemeinsam für -(CR⁴R⁵)ₙ- stehen und R³ eine der vorstehenden Bedeutungen hat, wobei R⁴ und R⁵ jeweils unabhängig voneinander für H oder einen C₁₋₆-Alkyl-Rest stehen und der Parameter n für eine ganze Zahl im Bereich von 2 bis 5, vorzugsweise für 2 oder 3 steht,
und jede Struktureinheit (S3) wenigstens eine funktionelle Gruppe ausgewählt aus der Gruppe bestehend aus Carboxyl-Gruppen, Hydroxyl-Gruppen, Thiol-Gruppen, Amino-Gruppen und Epoxid-Gruppen sowie Mischungen davon, vorzugsweise ausgewählt aus der Gruppe bestehend aus Carboxyl-Gruppen und Hydroxyl-Gruppen sowie Mischungen davon, aufweist,
zur zumindest teilweisen Beschichtung eines Substrats, vorzugsweise eines Substrats aus oder basierend auf wenigstens einem Kunststoff, mit einer Basislackschicht.

Es wurde überraschend gefunden, dass durch den Einsatz des erfindungsgemäßen Copolymeren bzw. der erfindungsgemäßen Beschichtungszusammensetzung zur Herstellung einer Basislackschicht auf einer Substratoberfläche, vorzugsweise eines Substrats aus oder basierend auf wenigstens einem Kunststoff, eine gute Haftung zu der darunterliegenden Substratoberfläche und zudem zu einer gegebenenfalls darüber liegenden weiteren Schicht wie einer Klarlackschicht erzielt werden kann, insbesondere aufgrund der Gegenwart der Komponente (C) in der erfindungsgemäßen Beschichtungszusammensetzung. Dabei hat sich überraschenderweise herausgestellt, dass diese gute Haftung auch noch erzielt werden kann, nachdem das entsprechende mit der erfindungsgemäßen Beschichtungszusammensetzung und gegebenenfalls einer darauf aufgebrachten Klarlackschicht beschichtete Substrat bestimmten Belastungen, insbesondere verschiedenen klimatischen Bedingungen wie einer Bewitterung, ausgesetzt worden ist und über eine bestimmte Dauer wie beispielsweise mehreren Monaten bei diesen Bedingungen gelagert worden ist. Auch nach einer solchen mehrmonatigen Lagerung konnte überraschenderweise keine signifikante Verschlechterung der Haftungseigenschaften beobachtet werden. Die mittels der erfindungsgemäßen Beschichtungszusammensetzung zumindest teilweise beschichteten Substrate weisen somit eine hervorragende Lagerstabilität auf.

Insbesondere wurde überraschend gefunden, dass eine solche gute Haftung auch ohne vorherige Beschichtung des Substrats mit einem Haftprimer erzielt werden kann, wodurch durch Einsatz des erfindungsgemäßen Copolymeren bzw. der erfindungsgemäßen Beschichtungs-zusammensetzung insgesamt ein ökonomischeres Beschichtungsverfahren ermöglicht wird, da auf den separaten Beschichtungsschritt des Substrats mit einem Haftprimer verzichtet werden kann.

Insbesondere wurde überraschend gefunden, dass eine solche gute Haftung auch ohne die vorherige Durchführung einer Vorbehandlung des Substrats ermöglicht wird.

Der Begriff "umfassend" im Sinne der vorliegenden Erfindung, beispielsweise in Zusammenhang mit dem erfindungsgemäßen Copolymeren bzw. der erfindungsgemäßen wässrigen Beschichtungs-zusammensetzung, hat in einer bevorzugten Ausführungsform die Bedeutung "bestehend aus". Dabei können - hinsichtlich der erfindungsgemäßen wässrigen Beschichtungszusammensetzung - in dieser bevorzugten Ausführungsform neben den Komponenten Wasser, (A1), (B) und (C), gegebenenfalls zudem wenigstens eine weitere optionale Komponente (D) und/oder (A2) und/oder organische Lösemittel in der erfindungsgemäßen Beschichtungszusammensetzung enthalten sein. Alle Komponenten können jeweils in einer ihrer nachstehend genannten bevorzugten Ausführungsformen in der erfindungsgemäßen Beschichtungszusammensetzung enthalten sein.

Vorzugsweise addieren sich die Anteile in Gew.-% der in der erfindungsgemäßen Beschichtungszusammensetzung enthaltenen Komponenten Wasser, (A1), (B) und (C) gegebenenfalls zudem (D) und/oder (A2) und/oder organische Lösemittel auf 100 Gew.-%, bezogen auf das Gesamtgewicht der Beschichtungszusammensetzung.

### Substrat

Als erfindungsgemäß eingesetztes Substrat eignen sich alle üblicherweise eingesetzten und dem Fachmann bekannten Substrate, insbesondere jedoch Kunststoffsubstrate. Bei "Kunststoffsubstraten" oder "Substraten aus Kunststoff" handelt es sich vorzugsweise um Substrate aus oder basierend auf wenigstens einem Kunststoff. Als Kunststoffe kommen alle üblichen dem Fachmann bekannten Kunststoffe in Frage, insbesondere Polystyrol (PS), Polyvinylchlorid (PVC), Polyurethan (PUR) bzw. (PUR-RIM), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), Polycarbonat (PC) modifiziert mit Polybutadienterephthalat (PC-PBT), Acrylnitril-Butadien-Styrol-Copolymere (ABS), Polyolefine wie Polyethylene (PE) und Polypropylen (PP) sowie Polyolefine wie zum Beispiel Polypropylen (PP), die modifiziert sind mit Ethylen-Propylen-Dien-Mischpolymeren (EPDM) oder mit Ethylen-Butylen-Dien-Mischpolymeren (EBDM). Möglich sind dabei auch Kunststoffsubstrate, die verschiedene der genannten Kunststoffe, demnach also Mischungen dieser Kunststoffe, enthalten. Besonders bevorzugte Kunststoffe sind Polypropylen (PP) und Polypropylen (PP) modifiziert mit Ethylen-Propylen-Dien-Mischpolymeren (EPDM). Die Modifizierung von PP mit EPDM dient im Wesentlichen dem Elastifizieren des Kunststoffs und kann unter anderem die Lackierbarkeit des Kunststoffes beeinflussen. Bei geringen EPDM-Anteilen ist die Lackierbarkeit beziehungsweise die Haftung der Lackierung auf dem Substrat oftmals schlechter als bei höheren Anteilen an EPDM. Vorteilhaft sind EPDM-Anteile von wenigstens 20 Gew.% wie zum Beispiel von 20 bis 25 Gew.-%, bezogen auf das Gesamtgewicht des Kunststoffs wie Polypropylen und EPDM. Die erfindungsgemäße wässrige Beschichtungszusammensetzung eignet sich insbesondere zur Lackierung von Polypropylen/EPDM-Kunststoffen mit niedrigen EPDM-Anteilen von beispielsweise nicht höher als 25 Gew.-%, insbesondere nicht höher als 20 Gew.-%.

Vorzugsweise weist das eingesetzte Substrat keine Primerschicht auf, insbesondere keine Haftprimer-Schicht, d.h. die erfindungsgemäße Beschichtungszusammensetzung wird direkt auf die Substratoberfläche des eingesetzten Substrats aufgetragen.

Das erfindungsgemäß eingesetzte Substrat kann ein vorbehandeltes Substrat sein. Mögliche Vorbehandlungen sind dabei das Beflammen, die Plasmabehandlung und die Corona-Entladung, insbesondere das Beflammen. Vorzugsweise ist das erfindungsgemäß eingesetzte Substrat jedoch kein vorbehandeltes, d.h. ein unbehandeltes Substrat.

Bei den erfindungsgemäß eingesetzten Substraten kann es sich um Kunststoffplatten handeln. Möglich sind als Substrate aber auch Fahrzeugkarosserien aus Kunststoffen oder bestimmte Fahrzeugteile sowie Fahrzeuganbauteile und Fahrzeugzubehörteile sowohl für den Fahrzeuginnenbereich als auch den Fahrzeugaußenbereich.

### Erfindungsgemäßes Copolymer

Das erfindungsgemäße Copolymer ist erhältlich durch Copolymerisation von wenigstens drei jeweils voneinander verschiedenen ethylenisch ungesättigten Monomeren und weist wenigstens drei voneinander verschiedene Struktureinheiten (S1) und (S2) und (S3) auf. Es können jedoch noch weitere Monomere zum Aufbau des Copolymeren eingesetzt werden, d.h. das Copolymer kann neben (S1) und (S2) und (S3) noch weitere Struktureinheiten wie beispielsweise Struktureinheiten (S4) aufweisen.

Dem Fachmann ist der Begriff der "ethylenisch ungesättigten Monomere" bekannt. Solche Monomere weisen wenigstens eine, vorzugsweise genau eine, ethylenisch ungesättigte Gruppe auf, d.h. wenigstens eine ungesättigte Kohlenstoff-Kohlenstoff-Doppelbindung. Ethylenisch ungesättigte Gruppen sind beispielsweise Vinyl-Gruppen, Allyl-Gruppen und/oder (Meth)acryl-Gruppen. Das erfindungsgemäße Copolymer selbst weist vorzugsweise keine ethylenisch ungesättigten Gruppen mehr auf.

Vorzugsweise wird durch die Copolymerisation die Polymerhauptkette des erfindungsgemäßen Copolymeren aufgebaut. Somit befinden sich die wenigstens eine verzweigte Alkyl-Gruppe mit wenigstens 11, vorzugsweise wenigstens 13, Kohlenstoffatomen, die wenigstens eine über eine C₁₋₁₀-Alkylen-Gruppe gebundene Harnstoff-Gruppe der allgemeinen Formel (I) und die wenigstens eine funktionelle Gruppe ausgewählt aus der Gruppe bestehend aus Carboxyl-Gruppen, Hydroxyl-Gruppen, Thiol-Gruppen, Amino-Gruppen und Epoxid-Gruppen sowie Mischungen davon, vorzugsweise in den Seitenketten bzw. Seitengruppen und nicht in der Hauptkette des erfindungsgemäßen Copolymeren. Das erfindungsgemäße Copolymer kann linear, kammförmig, sternförmig oder verzweigt aufgebaut sein. Die Verteilung der wenigstens drei Struktureinheiten (S1), (S2) und (S3) kann sowohl statistisch als auch strukturiert sein. Liegt eine strukturierte Verteilung vor, so sind die wenigstens drei Struktureinheiten (S1), (S2) und (S3) gradientenartig oder blockartig verteilt. Gradientenartige erfindungsgemäße Copolymere sind vorzugsweise Copolymere, deren Polymerhauptkette durch Copolymerisation der wenigstens drei voneinander verschiedenen ethylenisch ungesättigten Monomeren gebildet wird, und bei denen entlang der Polymerhauptkette die Konzentration wenigstens einer dieser Struktureinheiten kontinuierlich abnimmt und die Konzentration des oder der verbleibenden Struktureinheiten zunimmt. Blockartige erfindungsgemäße Copolymere (Blockcopolymere) sind vorzugsweise Copolymere, deren Polymerhauptkette durch Zugabe von wenigstens zwei ethylenisch ungesättigten Monomeren zu jeweils unterschiedlichen Zeitpunkten bei Durchführung einer kontrollierten Polymerisationsreaktion zur Herstellung des erfindungsgemäßen Copolymeren, gebildet wird. Die Struktureinheiten (S1) und (S2) und (S3) sind vorzugsweise jeweils wiederkehrend.

Vorzugsweise weist erfindungsgemäße Copolymer ein gewichtsmittleres Molekulargewicht von 1 000 bis 100 000 g/mol, besonders bevorzugt von 3 000 bis 80 000 g/mol, ganz besonders bevorzugt von 5 000 bis 60 000 g/mol, insbesondere von 7 000 bis 55 000 g/mol oder von 7 500 bis 50 000 g/mol, noch bevorzugter von 10 000 bis 40 000 g/mol, am meisten bevorzugt von 10 000 bis 30 000 g/mol auf. Die Bestimmungsmethode zur Ermittlung des gewichtsmittleren Molekulargewichts ist nachstehend beschrieben.

Vorzugsweise weist das erfindungsgemäße Copolymer ein zahlenmittleres Molekulargewicht von 100 bis 50 000 g/mol, besonders bevorzugt von 5 00 bis 40 000 g/mol, ganz besonders bevorzugt von 1 000 bis 25 000 g/mol, insbesondere von 2 000 bis 20 000 g/mol, noch bevorzugter von 3 000 bis 15 000 g/mol, am meisten bevorzugt von 3 500 bis 10 000 g/mol auf. Die Bestimmungsmethode zur Ermittlung des zahlenmittleren Molekulargewichts ist nachstehend beschrieben.

Vorzugsweise weist das erfindungsgemäße Copolymer durch Einbau der Struktureinheit (S3) funktionelle COOH-Gruppen auf. Vorzugsweise weist das erfindungsgemäße Copolymer eine Säurezahl von 5 bis 200, besonders bevorzugt von 7,5 bis 150, ganz besonders bevorzugt von 10 bis 100, insbesondere von 12,5 bis 50 oder von 15 bis 40, am meisten bevorzugt von 15 bis 30, mg KOH pro g an Copolymer auf. Die Bestimmungsmethode zur Ermittlung der Säure-Zahl ist nachstehend beschrieben.

Das erfindungsgemäße Copolymer weist vorzugsweise durch Einbau der Struktureinheit (S3) funktionelle OH-Gruppen auf. Vorzugsweise weist das erfindungsgemäße Copolymer eine OH-Zahl (Hydroxyl-Zahl) von 5 bis 100, besonders bevorzugt von 10 bis 90, ganz besonders bevorzugt von 20 bis 80, insbesondere von 30 bis 70 oder von 40 bis 60, mg KOH pro g an Copolymer auf. Die Bestimmungsmethode zur Ermittlung der Hydroxyl-Zahl ist nachstehend beschrieben.

Vorzugsweise werden die Struktureinheiten (S1), (S2) und (S3) durch Copolymerisation von Monomeren in das Copolymer eingeführt werden, die jeweils unabhängig voneinander wenigstens eine (Meth)acryl-Gruppe als ethylenisch ungesättigte Gruppe aufweisen.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Jede Struktureinheit (S1) weist wenigstens eine verzweigte Alkyl-Gruppe mit wenigstens 11, vorzugsweise wenigstens 12, ganz besonders bevorzugt wenigstens 13, noch bevorzugter wenigstens 14, insbesondere wenigstens 15 oder 16, am meisten bevorzugt wenigstens 17, Kohlenstoffatomen auf. Vorzugsweise ist die Struktureinheit (S1) die einzige Struktureinheit des Copolymeren, die wenigstens eine solche verzweigte Alkyl-Gruppe mit wenigstens 11 Kohlenstoffatomen aufweist. Es ist erfindungswesentlich, dass die Alkyl-Gruppe mit wenigstens 11 Kohlenstoffatomen verzweigt ist, da mit einer entsprechenden linearen (unverzweigten) Gruppe keine ausreichende Haftung bei Verwendung des erfindungsgemäßen Copolymeren als Haftungs-vermittelndes Additiv erzielt werden kann.

Zum Einbau der Struktureinheit (S1) in das erfindungsgemäße Copolymer werden vorzugsweise entsprechende ethylenisch ungesättigte Monomere eingesetzt, die zum Einbau der Struktureinheit (S1) befähigt sind. Beispiele hierfür sind Monomere, welche zum Beispiel eine (Meth)acrylat-Gruppe aufweisen, an die ein verzweigter Alkyl-Rest mit wenigstens 11, insbesondere wenigstens 13, Kohlenstoffatomen gebunden ist. Solche Monomere, beispielsweise ein solches (Meth)acrylat mit einem verzweigten C₁₇-Alkyl-Rest sind kommerziell erhältlich.

Das erfindungsgemäße Copolymer kann dabei sich unterscheidende Struktureinheiten (S1) aufweisen: beispielsweise kann das erfindungsgemäße Copolymer wenigstens eine Struktureinheit (S1) aufweisen, welche eine verzweigte Alkyl-Gruppe mit wenigstens 13 Kohlenstoffatomen aufweist, und wenigstens eine weitere Struktureinheit (S1) aufweisen, welche eine verzweigte Alkyl-Gruppe mit wenigstens 17 Kohlenstoffatomen aufweist.

### Vorzugsweise wird zur Herstellung des erfindungsgemäßen Copolymeren

(s1) wenigstens ein zur Ausbildung der Struktureinheit (S1) befähigtes ethylenisch ungesättigtes Monomer in einer Menge in einem Bereich von 0,5 bis 15 mol-%, besonders bevorzugt von 0,6 bis 12,5 mol-%, ganz besonders bevorzugt von 0,7 bis 10 mol-%, noch bevorzugter von 0,8 bis 7,5 mol-%, insbesondere bevorzugt von 0,9 bis 5 mol-%, am meisten bevorzugt von 1,0 bis 4 mol-% oder von 1,0 bis 3 mol-%, jeweils bezogen auf die Gesamtmenge aller zur Herstellung des Copolymeren eingesetzten Monomere in mol-%, eingesetzt, wobei sich die Gesamtmenge aller zur Herstellung des Copolymeren eingesetzten Monomere insgesamt auf 100 mol-% addiert.

Jede Struktureinheit (S2) weist wenigstens eine über eine C₁₋₁₀-Alkylen-Gruppe, vorzugsweise C₁₋₆-Alkylen-Gruppe, gebundene Harnstoff-Gruppe der allgemeinen Formel (I) auf, 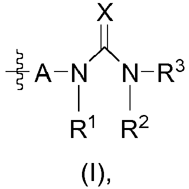 worin
X für O oder S, vorzugsweise für O, steht,
A für eine C₁₋₁₀-Alkylen-Gruppe, vorzugsweise C₁₋₆-Alkylen-Gruppe, steht und R¹, R² und R³ jeweils unabhängig voneinander für H oder einen C₁₋₁₀-Alkyl-Rest wie einen C₁₋₆-Alkyl-Rest stehen oder
R¹ und R² gemeinsam für -(CR⁴R⁵)ₙ- stehen und R³ eine der vorstehenden Bedeutungen hat, wobei R⁴ und R⁵ jeweils unabhängig voneinander für H oder einen C₁₋₆-Alkyl-Rest stehen und der Parameter n für eine ganze Zahl im Bereich von 2 bis 5, vorzugsweise für 2 oder 3 steht,
vorzugsweise R¹ und R² gemeinsam für -(CR⁴R⁵)ₙ- stehen und R³ für H oder einen C₁₋₆-Alkyl-Rest steht, wobei R⁴ und R⁵ jeweils unabhängig voneinander für H oder einen C₁₋₆-Alkyl-Rest stehen, und der Parameter n für eine ganze Zahl im Bereich von 2 bis 5, vorzugsweise für 2 oder 3 steht.

Im Rahmen der vorliegenden Erfindung bezeichnet das in Formeln wie der allgemeinen Formel (I) verwendete Symbol 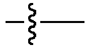 eine Verknüpfung eines entsprechenden Restes an die jeweilige übergeordnete allgemeine Struktur, d.h. beispielsweise eine Verknüpfung des Restes -A-N(R¹)-C(=X)-N(R²)(R³) an das Copolymer-Gerüst und insbesondere an die Polymerhauptkette. Wird beispielsweise Ureidomethyl(meth)acrylat als Monomer eingesetzt, so ist die Variable A über eine -O-C(=O)-Gruppe an die Polymerhauptkette gebunden. Wird beispielsweise (Meth)acrylamidoethylethylenharnstoff als Monomer eingesetzt, so ist die Variable A über eine -NH-C(=O)-Gruppe an die Polymerhauptkette gebunden

Vorzugsweise ist die Struktureinheit (S2) die einzige Struktureinheit des Copolymeren, die wenigstens eine solche Harnstoff-Gruppe der allgemeinen Formel (I) aufweist.

Zum Einbau der Struktureinheit (S2) in das erfindungsgemäße Copolymer werden vorzugsweise entsprechende ethylenisch ungesättigte Monomere eingesetzt, die zum Einbau der Struktureinheit (S2) befähigt sind. Beispiele hierfür sind Ureidomethyl(meth)acrylat und/oder (Meth)acrylamidoethylethylenharnstoff, die beide kommerziell erhältlich sind.

### Vorzugsweise wird zur Herstellung des erfindungsgemäßen Copolymeren

(s2) wenigstens ein zur Ausbildung der Struktureinheit (S2) befähigtes ethylenisch ungesättigtes Monomer in einer Menge in einem Bereich von 0,5 bis 15 mol-%, besonders bevorzugt von 0,75 bis 12,5 mol-%, ganz besonders bevorzugt von 1,0 bis 10 mol-%, noch bevorzugter von 1,25 bis 7,5 mol-%, insbesondere bevorzugt von 1,5 bis 5 mol-%, am meisten bevorzugt von 1,75 bis 4 mol-%, jeweils bezogen auf die Gesamtmenge aller zur Herstellung des Copolymeren eingesetzten Monomere in mol-%, eingesetzt, wobei sich die Gesamtmenge aller zur Herstellung des Copolymeren eingesetzten Monomere insgesamt auf 100 mol-% addiert.

Das erfindungsgemäße Copolymer kann dabei sich unterscheidende Struktureinheiten (S2) aufweisen: beispielsweise kann das erfindungsgemäße Copolymer wenigstens eine Struktureinheit (S2) aufweisen, in der X = O, R¹ und R² gemeinsam für -(CR⁴R⁵)ₙ- stehen, R³ für H steht, wobei R⁴ und R⁵ jeweils unabhängig voneinander für H stehen, und der Parameter n für 2 steht, und eine weitere Struktureinheit (S2), in der X = O, R¹ und R² gemeinsam für -(CR⁴R⁵)ₙ-stehen, R³ für H steht, wobei R⁴ und R⁵ jeweils unabhängig voneinander für H stehen, und der Parameter n für 3 steht.

Jede Struktureinheit (S3) weist wenigstens eine funktionelle Gruppe ausgewählt aus der Gruppe bestehend aus Carboxyl-Gruppen, Hydroxyl-Gruppen, Thiol-Gruppen, Amino-Gruppen einschließlich primärer und sekundärer Amino-Gruppen, und Epoxid-Gruppen sowie Mischungen davon, vorzugsweise ausgewählt aus der Gruppe bestehend aus Carboxyl-Gruppen und Hydroxyl-Gruppen sowie Mischungen davon, auf. Vorzugsweise ist die Struktureinheit (S3) die einzige Struktureinheit des Copolymeren, die wenigstens eine solche der vorstehend genannten funktionellen Gruppen aufweist.

Das erfindungsgemäße Copolymer kann dabei sich unterscheidende Struktureinheiten (S3) aufweisen: beispielsweise kann das erfindungsgemäße Copolymer wenigstens eine Struktureinheit (S3) aufweisen, welche wenigstens eine Carboxyl-Gruppe aufweist, und wenigstens eine weitere Struktureinheit (S3) aufweisen, welche wenigstens eine Hydroxyl-Gruppe aufweist.

Zum Einbau der Struktureinheit (S3) in das erfindungsgemäße Copolymer werden vorzugsweise entsprechende ethylenisch ungesättigte Monomere eingesetzt, die zum Einbau der Struktureinheit (S3) befähigt sind. Beispiele hierfür sind OHfunktionelle ethylenisch ungesättigte Monomere wie Alkyl(meth)acrylate, wobei die Alkyl-Reste dieser (Meth)acrylate jeweils wenigstens eine OH-Gruppe oder wenigstens eine geschützte OH-Gruppe aufweisen, insbesondere ausgewählt aus der Gruppe bestehend aus Hydroxyethyl(meth)acrylat, Hydroxypropyl(meth)acrylat und Hydroxybutyl-(meth)acrylat. Ebenso geeignet sind beispielsweise Allylalkohol, Vinylalkohol, Hydroxyalkylvinylether und Hydroxyalkylallylether. Ein Beispiel für ein COOH-funktionelles ethylenisch ungesättigtes Monomer, das zur Ausbildung der Struktureinheit (S3) eingesetzt werden kann, ist (Meth)acrylsäure.

### Vorzugsweise wird zur Herstellung des erfindungsgemäßen Copolymeren

(s3) wenigstens ein zur Ausbildung der Struktureinheit (S3) befähigtes ethylenisch ungesättigtes Monomeren in einer Menge in einem Bereich von 5 bis 50 mol-%, besonders bevorzugt von 7,5 bis 45 mol-%, ganz besonders bevorzugt von 10,0 bis 40 mol-%, noch bevorzugter von 12,5 bis 35 mol-%, insbesondere bevorzugt von 15 bis 30 mol-%, am meisten bevorzugt von 15 bis 25 mol-%, jeweils bezogen auf die Gesamtmenge aller zur Herstellung des Copolymeren eingesetzten Monomere in mol-%, eingesetzt, wobei sich die Gesamtmenge aller zur Herstellung des Copolymeren eingesetzten Monomere insgesamt auf 100 mol-% addiert.

### Vorzugsweise weist

jede Struktureinheit (S1) wenigstens eine verzweigte Alkyl-Gruppe mit wenigstens 13 Kohlenstoffatomen auf,
jede Struktureinheit (S2) wenigstens eine über eine C₁₋₆-Alkylen-Gruppe gebundene Harnstoff-Gruppe der allgemeinen Formel (I) auf 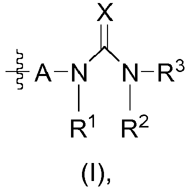 worin
X für O oder S, vorzugsweise O, steht,
A für eine C₁₋₆-Alkylen-Gruppe steht und
R¹, R² und R³ jeweils unabhängig voneinander für H oder einen C₁₋₆-Alkyl-Rest stehen oder
R¹ und R² gemeinsam für -(CR⁴R⁵)ₙ- stehen und R³ eine der vorstehenden Bedeutungen hat, wobei R⁴ und R⁵ jeweils unabhängig voneinander für H oder einen C₁₋₆-Alkyl-Rest stehen, und der Parameter n für eine ganze Zahl im Bereich von 2 bis 5, vorzugsweise für 2 oder 3 steht,
vorzugsweise R¹ und R² gemeinsam für -(CR⁴R⁵)ₙ- stehen und R³ für H oder einen C₁₋₆-Alkyl-Rest steht, wobei R⁴ und R⁵ jeweils unabhängig voneinander für H oder einen C₁₋₆-Alkyl-Rest stehen, und der Parameter n für eine ganze Zahl im Bereich von 2 bis 5, vorzugsweise für 2 oder 3 steht
und jede vorhandene Struktureinheit (S3) wenigstens eine funktionelle Gruppe ausgewählt aus der Gruppe bestehend aus Carboxyl-Gruppen und Hydroxyl-Gruppen sowie Mischungen davon auf.

Vorzugsweise weist das erfindungsgemäße Copolymer wenigstens eine weitere von (S1) und (S2) sowie von (S3) verschiedene Struktureinheit (S4) auf, wobei jede Struktureinheit (S4) wenigstens eine Gruppe ausgewählt aus der Gruppe bestehend aus verzweigten und unverzweigten C₁₋₁₀-Alkyl-Gruppen, gegebenenfalls mit wenigstens einer C₁₋₆-Alkyl-Gruppe substituierten C₃₋₁₀-Cycloalkyl-Gruppen, gegebenenfalls mit wenigstens einer C₁₋₆-Alkyl-Gruppe substituierten aromatischen Gruppen, über eine C₁₋₆-Alkylen-Gruppe gebundenen gegebenenfalls mit wenigstens einer C₁₋₆-Alkyl-Gruppe substituierten aromatischen Gruppen und über eine C₁₋₆-Alkylen-Gruppe gebundenen gegebenenfalls mit wenigstens einer C₁₋₆-Alkyl-Gruppe substituierten C₃₋₁₀-Cycloalkyl-Gruppen, aufweist.

Zum Einbau der Struktureinheit (S4) in das erfindungsgemäße Copolymer werden vorzugsweise entsprechende ethylenisch ungesättigte Monomere eingesetzt, die zum Einbau der Struktureinheit (S4) befähigt sind. Beispiele hierfür sind ethylenisch ungesättigte Monomere, die wenigstens eine Gruppe ausgewählt aus der Gruppe bestehend aus
(s4a) verzweigten und unverzweigten C₁₋₁₀-Alkyl-Gruppen,
(s4b) gegebenenfalls mit wenigstens einer C₁₋₆-Alkyl-Gruppe substituierten C₃₋₁₀-Cycloalkyl-Gruppen,
(s4c) gegebenenfalls mit wenigstens einer C₁₋₆-Alkyl-Gruppe substituierten aromatischen Gruppen mit beispielsweise 6 bis 16 Kohlenstoffatomen,
(s4d) über eine C₁₋₆-Alkylen-Gruppe gebundenen gegebenenfalls mit wenigstens einer C₁₋₆-Alkyl-Gruppe substituierten aromatischen Gruppen mit beispielsweise 6 bis 16 Kohlenstoffatomen und
(s4e) über eine C₁₋₆-Alkylen-Gruppe gebundenen gegebenenfalls mit wenigstens einer C₁₋₆-Alkyl-Gruppe substituierten C₃₋₁₀-Cycloalkyl-Gruppen,
aufweisen.

Beispiele für Monomere (s4a) sind Alkyl(meth)acrylate wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat und Stearyl(meth)acrylat. Beispiele für Monomere (s4b) sind Cycloalkyl(meth)acrylate wie zum Beispiel Cyclohexyl(meth)acrylat oder Isobornyl(meth)acrylat. Beispiele für Monomere (s4c) sind Aryl(meth)acrylate wie zum Beispiel Phenyl(meth)acrylat oder andere ethylenisch ungesättigte Monomere wie Styrol. Beispiele für Monomere (s4d) sind Alkylaryl(meth)acrylate, wie zum Beispiel Benzyl(meth)acrylat.

### Vorzugsweise wird zur Herstellung des erfindungsgemäßen Copolymeren

(s4) wenigstens ein zur Ausbildung der Struktureinheit (S4) befähigtes ethylenisch ungesättigtes Monomeren in einer Menge in einem Bereich von 20 bis 90 mol-%, besonders bevorzugt von 25 bis 90 mol-%, ganz besonders bevorzugt von 30 bis 87,5 mol-%, noch bevorzugter von 35 bis 85 mol-%, insbesondere bevorzugt von 40 bis 82,5 mol-%, am meisten bevorzugt von 45 bis 80 mol-% oder von 50 bis 80 mol-% oder von 60 bis 80 mol-%, jeweils bezogen auf die Gesamtmenge aller zur Herstellung des Copolymeren eingesetzten Monomere in mol-% eingesetzt, wobei sich die Gesamtmenge aller zur Herstellung des Copolymeren eingesetzten Monomere insgesamt auf 100 mol-% addiert.

Zur Initiierung der Copolymerisation kann wenigstens ein Initiator wie beispielsweise tert.-Butylperoxy2-ethylhexanoat eingesetzt werden. Vorzugsweise erfolgt die Copolymerisation in einem organischen Lösemittel wie beispielsweise Methylethylketon (MEK) und/oder Methylisobutylketon (MIBK). Die Copolymerisation erfolgt vorzugsweise radikalisch, kationisch oder anionisch. Besonders bevorzugt ist eine radikalische Polymerisation zur Herstellung des erfindungsgemäßen Copolymeren. Zur Herstellung können lebende oder kontrollierte Polymerisationsverfahren eingesetzt werden, beispielsweise kontrollierte radikalische Polymerisationsverfahren oder eine Gruppentransferpolymerisation.

### Vorzugsweise ist das erfindungsgemäße Copolymer erhältlich durch radikalische Copolymerisation von

(s1) wenigstens einem zur Ausbildung der Struktureinheit (S1) befähigten ethylenisch ungesättigten Monomeren in einer Menge in einem Bereich von 0,5 bis 15 mol-%, besonders bevorzugt von 0,6 bis 12,5 mol-%, ganz besonders bevorzugt von 0,7 bis 10 mol-%, noch bevorzugter von 0,8 bis 7,5 mol-%, insbesondere bevorzugt von 0,9 bis 5 mol-%, am meisten bevorzugt von 1,0 bis 4 mol-% oder von 1,0 bis 3 mol-%, jeweils bezogen auf die Gesamtmenge aller zur Herstellung des Copolymeren eingesetzten Monomere in mol-%,
(s2) wenigstens einem zur Ausbildung der Struktureinheit (S2) befähigten ethylenisch ungesättigten Monomeren in einer Menge in einem Bereich von 0,5 bis 15 mol-%, besonders bevorzugt von 0,75 bis 12,5 mol-%, ganz besonders bevorzugt von 1,0 bis 10 mol-%, noch bevorzugter von 1,25 bis 7,5 mol-%, insbesondere bevorzugt von 1,5 bis 5 mol-%, am meisten bevorzugt von 1,75 bis 4 mol-%, jeweils bezogen auf die Gesamtmenge aller zur Herstellung des Copolymeren eingesetzten Monomere in mol-%,
(s3) wenigstens einem zur Ausbildung der Struktureinheit (S3) befähigten ethylenisch ungesättigten Monomeren in einer Menge in einem Bereich von 5 bis 50 mol-%, besonders bevorzugt von 7,5 bis 45 mol-%, ganz besonders bevorzugt von 10,0 bis 40 mol-%, noch bevorzugter von 12,5 bis 35 mol-%, insbesondere bevorzugt von 15 bis 30 mol-%, am meisten bevorzugt von 15 bis 25 mol-%, jeweils bezogen auf die Gesamtmenge aller zur Herstellung des Copolymeren eingesetzten Monomere in mol-%, und
(s4) gegebenenfalls wenigstens einem zur Ausbildung der Struktureinheit (S4) befähigten ethylenisch ungesättigten Monomeren in einer Menge in einem Bereich von 20 bis 90 mol-%, besonders bevorzugt von 25 bis 90 mol-%, ganz besonders bevorzugt von 30 bis 87,5 mol-%, noch bevorzugter von 35 bis 85 mol-%, insbesondere bevorzugt von 40 bis 82,5 mol-%, am meisten bevorzugt von 45 bis 80 mol-% oder von 50 bis 80 mol-% oder von 60 bis 80 mol-%, jeweils bezogen auf die Gesamtmenge aller zur Herstellung des Copolymeren eingesetzten Monomere in mol-%,
wobei sich die Gesamtmenge aller zur Herstellung des Copolymeren eingesetzten Monomere (s1), (s2), (s3) und (s4) insgesamt auf 100 mol-% addiert.

### Verwendung des erfindungsgemäßen Copolymeren als Haftungs-vermittelndes Additiv in wässrigen Beschichtungszusammensetzungen

Ein weiterer Gegenstand der vorliegenden Erfindung ist eine Verwendung des erfindungsgemäßen Copolymeren als Haftungs-vermittelndes Additiv in einer wässrigen Beschichtungszusammensetzung, die zur zumindest teilweisen Beschichtung eines Substrats, vorzugsweise eines Substrats aus oder basierend auf wenigstens einem Kunststoff, mit einer Basislackschicht geeignet ist.

Dem Durchschnittsfachmann ist bekannt, dass die Verträglichkeit eines Haftvermittlers, d.h. eines Haftungs-vermittelnden Additivs in wässrigen Beschichtungszusammensetzungen dergestalt zu sein hat, dass sich dieser an den Grenzflächen einer durch Einsatz einer wässrigen Beschichtungszusammensetzung erhaltenen Lackschicht wie einer Basislackschicht vorzugsweise anreichert, um so die Haftung zu den angrenzenden Schichten bzw. dem Substrat verbessern zu können. Ist die Wasserlöslichkeit des Haftvermittlers zu groß, so erfolgt die besagte Anreicherung an den Grenzflächen vorzugsweise nicht und es tritt keine Haftungsverbesserung bzw. Haftungsvermittlung ein.

Alle im Zusammenhang mit dem erfindungsgemäßen Copolymeren hierin zuvor beschriebene bevorzugte Ausführungsformen sind auch bevorzugte Ausführungsformen hinsichtlich der Verwendung dieses Copolymeren als Haftungs-vermittelndes Additiv in einer wässrigen Beschichtungszusammensetzung.

### Beschichtungszusammensetzung

Ein weiterer Gegenstand der vorliegenden Erfindung ist eine wässrige Beschichtungszusammensetzung umfassend wenigstens ein polymeres Harz (A1) und gegebenenfalls wenigstens ein Vernetzungsmittel (A2), wenigstens ein Pigment (B) und wenigstens ein von dem polymeren Harz (A1) verschiedenes und erfindungsgemäß als Haftungs-vermittelndes Additiv eingesetztes erfindungsgemäßes Copolymer als Komponente (C).

Alle im Zusammenhang mit dem erfindungsgemäßen Copolymeren hierin zuvor beschriebene bevorzugte Ausführungsformen sind auch bevorzugte Ausführungsformen hinsichtlich des Einsatzes dieses Copolymeren als Komponente (C) in der erfindungsgemäßen wässrigen Beschichtungszusammensetzung.

Die erfindungsgemäße Beschichtungszusammensetzung liegt vorzugsweise in Form einer Dispersion oder Lösung, insbesondere in Form einer Dispersion vor.

Die erfindungsgemäße wässrige Beschichtungszusammensetzung enthält als flüssiges Verdünnungsmittel Wasser.

Unter dem Begriff "wässrig" im Zusammenhang mit der erfindungsgemäßen Beschichtungszusammensetzung werden vorzugsweise solche Beschichtungszusammensetzungen verstanden, die - als flüssiges Verdünnungsmittel, d.h. als flüssiges Lösemittel und/oder Dispergiermittel, insbesondere Dispergiermittel - Wasser enthalten. Gegebenenfalls kann die erfindungsgemäße Beschichtungszusammensetzung jedoch zudem wenigstens ein organisches Lösemittel enthalten. Als Beispiele für solche organischen Lösemittel seien heterocyclische, aliphatische oder aromatische Kohlenwasserstoffe wie Toluol, Isophoron, Xylol, Solventnaphtha, Solvesso 100, Shellsol A, ein- oder mehrwertige Alkohole wie Ethylhexanol, Butoxypropanol, Isopropanol, Butyldiglykol, Methanol, Ethanol, Propanol und Butanol, Ether wie Diethylenglykoldimethylether und Dipropylenglycolmethylether, Ethyl- und Butylglykol, Ester wie Ethylacetat, Butylacetat, Pentylacetat oder Ethylethoxypropionat, Ketone wie Cyclohexanon, Methylethylketon (MEK), Methylamylketon, Methylisobutylketon (MIBK) und Aceton, und Amide, wie z. B. N-Methylpyrrolidon, N-Ethylpyrrolidon, Dimethylformamid, Toluol, Xylol, Solventnaphtha, Solvesso 100 und Shellsol A. Bevorzugt eingesetzt werden wassermischbare organische Lösemittel. Vorzugsweise beträgt der Anteil dieser organischen Lösemittel höchstens 25,0 Gew.-%, besonders bevorzugt höchstens 20,0 Gew.-%, ganz besonders bevorzugt höchstens 15,0 Gew.-%, insbesondere höchstens 10,0 Gew.-% oder höchstens 5,0 Gew.-%, jeweils bezogen auf das Gesamtgewicht der wässrigen Beschichtungszusammensetzung.

Der Begriff "wässrig" bedeutet im Rahmen der vorliegenden Erfindung insbesondere, dass die erfindungsgemäße Beschichtungszusammensetzung vorzugsweise mindestens 10 Gew.-%, besonders bevorzugt mindestens 20 Gew.-%, ganz besonders bevorzugt mindestens 25 Gew.-% Wasser, jeweils bezogen auf das Gesamtgewicht der wässrigen Beschichtungszusammensetzung, enthält. Besonders bevorzugt ist der Begriff "wässrig" so zu verstehen, dass neben der genannten Bedingungen "mindestens 10 Gew.-% (beziehungsweise mindestens 20 oder 25 Gew.-%) Wasser, bezogen auf das Gesamtgewicht der wässrigen Beschichtungszusammensetzung" der Anteil organischer Lösemittel in der erfindungsgemäßen Beschichtungszusammensetzung kleiner als 25 Gew.-%, insbesondere kleiner als 20 Gew.-%, jeweils bezogen auf das Gesamtgewicht der wässrigen Beschichtungszusammensetzung, ist.

Die erfindungsgemäße Beschichtungszusammensetzung dient zur Herstellung einer Basislackschicht auf der Substratoberfläche eines Substrats wie eines Substrats aus oder basierend auf wenigstens einem Kunststoff.

Der Begriff "Basislack" bzw. "Basislackschicht" ist dem Fachmann bekannt und dient vorzugsweise als Bezeichnung für eine in der allgemeinen Industrielackierung, insbesondere Automobil-Lackierung farbgebenden Zwischenbeschichtung, die zumindest teilweise auf einem Substrat aufgebracht wird. Der Basislack bzw. die Basislackschicht bildet dabei vorzugsweise die erste Schicht einer sogenannten Zweischichtlackierung. Die zweite, oberste Schicht ist vorzugsweise dann ein Klarlack, der die Basislackschicht vor Witterungseinflüssen sowie mechanischen und chemischen Einflüssen schützt.

Vorzugsweise weist die erfindungsgemäße Beschichtungszusammensetzung einen Festkörperanteil, d.h. einen Festkörpergehalt, im Bereich von 10 bis 50 Gew.-%, besonders bevorzugt im Bereich von 12,5 bis 45 Gew.-%, ganz besonders bevorzugt im Bereich von 15 bis 40 Gew.-%, insbesondere bevorzugt im Bereich von 17,5 bis 35 Gew.-% oder von 20 bis 30 Gew.-%, jeweils bezogen auf das Gesamtgewicht der Beschichtungszusammensetzung auf.

Dem Fachmann sind Bestimmungsmetoden zur Ermittlung des Festkörper-Anteils bzw. des Festkörpergehalts, d.h. der nicht-flüchtigen Anteile bekannt. Die Bestimmung des Festkörpergehalts erfolgt dabei gemäß der nachstehend beschriebenen Methode.

Die erfindungsgemäße Beschichtungszusammensetzung enthält wenigstens ein polymeres Harz (A1) und gegebenenfalls wenigstens ein Vernetzungsmittel (A2). Bei dem polymeren Harz (A1) handelt es sich um ein von dem erfindungsgemäßen Copolymer verschiedenes polymeres Harz.

Das wenigstens eine polymere Harz (A1), das gegebenenfalls vorhandene Vernetzungsmittel (A2) sowie das Copolymer (C) sind Bindemittel-Komponenten der erfindungsgemäßen Beschichtungszusammensetzung.

Unter dem Begriff "Bindemittel" werden im Sinne der vorliegenden Erfindung in Einklang mit der DIN EN ISO 4618 (deutsche Fassung, Datum: März 2007) vorzugsweise die vorzugsweise für die Filmbildung verantwortlichen nicht-flüchtigen Anteile einer Beschichtungszusammensetzung wie der erfindungsgemäßen Beschichtungszusammensetzung verstanden. Darin enthaltene Pigmente einschließlich des Pigments (B) und gegebenenfalls vorhandene Füllstoffe werden somit nicht unter den Begriff des Bindemittels subsumiert. Der nicht-flüchtige Anteil kann gemäß der nachstehend beschriebenen Methode bestimmt werden. Insbesondere werden unter dem Begriff "Bindemittel" die für die Filmbildung verantwortlichen in der Beschichtungs-zusammensetzung enthaltenen polymeren Harze (A1) verstanden. Vom Begriff des "Bindemittels" wird zudem in der Beschichtungszusammensetzung vorhandenes Vernetzungsmittel wie beispielsweise Komponente (A2), das Copolymer (C) sowie gegebenenfalls unter die Definition eines Bindemittels fallende und gegebenenfalls vorhandene Additive (D) umfasst.

Vorzugsweise wird zur Herstellung der erfindungsgemäßen Beschichtungszusammensetzung eine Dispersion oder Lösung, besonders bevorzugt wenigstens eine Dispersion, eingesetzt, die das wenigstens eine polymere Harz (A1) enthält. Ferner ist es möglich, zur Herstellung der erfindungsgemäßen Beschichtungszusammensetzung wenigstens eine Dispersion oder Lösung, besonders bevorzugt wenigstens eine Dispersion wenigstens eines Vernetzungsmittel (A2) einzusetzen, die kurz vor Herstellung der Beschichtungszusammensetzung mit der (A1) enthaltenden Lösung oder Dispersion zusammengegeben wird (2K-Beschichtungszusammensetzung).

Alle üblichen dem Fachmann bekannten polymeren Harze eignen sich dabei als polymeres Harz (A1) der erfindungsgemäßen Beschichtungs-zusammensetzung.

Vorzugsweise weist das wenigstens eine polymere Harz (A1) reaktive funktionelle Gruppen aufweist, die eine Vernetzungsreaktion ermöglichen. Das polymere Harz (A1) ist dabei vorzugsweise ein fremd-vernetzendes polymeres Harz. Um eine Vernetzungsreaktion zu ermöglichen, enthält die erfindungsgemäße Beschichtungszusammensetzung neben dem wenigstens einen polymeren Harz (A1) zudem wenigstens ein Vernetzungsmittel (A2). Alternativ kann jedoch auch ein selbst-vernetzendes polymeres Harz (A1) eingesetzt werden.

Das in der erfindungsgemäßen wässrigen Beschichtungszusammensetzung enthaltene polymere Harz (A1) bzw. das gegebenenfalls zudem enthaltene wenigstens eine Vernetzungsmittel (A2) sind vorzugsweise thermisch vernetzbar. Alternativ oder zusätzlich ist jedoch auch eine strahlenhärtende Vernetzung möglich. Vorzugsweise sind diese Komponenten beim Erwärmen auf eine Substrattemperatur von oder oberhalb von Raumtemperatur, d.h. bei einer Substrattemperatur von oder oberhalb von 18-23°C vernetzbar. Vorzugsweise sind diese Komponenten erst bei Substrattemperaturen ≥ 40°C, bevorzugter ≥ 50°C, besonders bevorzugt ≥ 60°C und ganz besonders bevorzugt ≥ 70°C vernetzbar.

Jede übliche dem Fachmann bekannte vernetzbare reaktive funktionelle Gruppe kommt als vernetzbare reaktive funktionelle Gruppe des polymeren Harzes (A1) dabei in Betracht. Vorzugsweise weist das polymere Harze (A1) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Gruppen, welche wenigstens eine C=C-Doppelbindung aufweisen, wie beispielsweise Vinyl-Gruppen oder (Meth)acrylat-Gruppen, und Epoxid-Gruppen sowie Mischungen davon, auf. Bevorzugt sind Hydroxyl-Gruppen, Carboxyl-Gruppen und/oder Epoxid-Gruppen, insbesondere Hydroxyl-Gruppen.

Vorzugsweise ist das wenigstens eine polymere Harz (A1) ausgewählt aus der Gruppe bestehend aus Polyurethanen, Polyestern, Polyamiden, Polyharnstoffen, Polystyrolen, Polycarbonaten, Poly(meth)acrylaten, Vinylester-basierten Harzen, Epoxid-Harzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch entsprechende Co-Polymere verstanden.

Besonders bevorzugt ist das wenigstens eine polymere Harz (A1) ausgewählt aus der Gruppe bestehend aus vorzugsweise jeweils funktionelle Hydroxyl-Gruppen aufweisenden Polyurethanen, Polyestern, Epoxidharzen und Poly(meth)acrylaten, insbesondere aus vorzugsweise jeweils funktionelle Hydroxyl-Gruppen aufweisenden Polyurethanen, Polyestern, und Poly(meth)acrylaten. Solche polymeren Harze werden beispielsweise im Römpp-Lexikon Lacke und Druckfarben, Georg Thieme Verlag, Stuttgart, New York, 1998, Seiten 73 bis 74, beschrieben. Die Dispergierbarkeit der polymeren Harze in Wasser kann über dem Fachmann geläufigen Maßnahmen erreicht werden. Dabei kann es sich um die ionische Modifizierung der polymeren Harze durch Einführung von Monomeren, die beispielsweise Carboxylat- oder Sulfonatgruppen enthalten, handeln. Möglich ist auch die nicht-ionische Modifizierung durch beispielsweise Polyglykoletherketten oder der zusätzlich Einsatz von bestimmten Additiven (D) wie Dispergiermitteln, beispielsweise Emulgatoren.

Die erfindungsgemäße Beschichtungszusammensetzung enthält das wenigstens eine polymere Harz (A1) vorzugsweise in einer Menge in einem Bereich von 5 bis 40 Gew.-%, besonders bevorzugt in einem Bereich von 7,5 bis 30 Gew.-%, ganz besonders bevorzugt in einem Bereich von 10 bis 25 Gew.-%, jeweils bezogen auf das Gesamtgewicht der Beschichtungszusammensetzung.

Die erfindungsgemäße Beschichtungszusammensetzung enthält gegebenenfalls wenigstens ein Vernetzungsmittel als Komponente (A2). Vorzugsweise enthält die erfindungsgemäße Beschichtungszusammensetzung wenigstens ein Vernetzungsmittel als Komponente (A2).

Das Vernetzungsmittel (A2) ist vorzugsweise zur thermischen Vernetzung bzw. Aushärtung geeignet. Solche Vernetzungsmittel sind dem Fachmann bekannt. Zur Beschleunigung der Vernetzung können der wässrigen Beschichtungszusammensetzung geeignete Katalysatoren zugesetzt werden.

Alle dem Fachmann bekannten üblichen Vernetzungsmittel (A2) können zur Herstellung der erfindungsgemäßen wässrigen Beschichtungszusammensetzung eingesetzt werden. Beispiele geeigneter Vernetzungsmittel sind Aminoplastharze, Polyamine, Phenoplaste, polyfunktionelle Mannich-Basen, Melaminharze, Benzoguanamin-Harze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, β-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Werden blockierte Polyisocyanate als Vernetzungsmittel gewählt, wird die erfindungsgemäß eingesetzte wässrige Beschichtungszusammensetzung als 1-Komponenten-Zusammensetzung (1-K) formuliert. Werden unblockierte Polyisocyanate als Vernetzungsmittel gewählt, wird die wässrige Beschichtungszusammensetzung als 2-Komponenten-Zusammensetzung (2-K) formuliert.

Ein besonders bevorzugtes Vernetzungsmittel (A2) ist ausgewählt aus der Gruppe bestehend aus blockierten Polyisocyanaten und Melamin-Harzen wie Melamin-Formaldehyd-Kondensationsprodukten, insbesondere veretherte (alkylierte) Melamin-Formaldehyd-Kondensationsprodukte.

Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber reaktiven funktionellen Gruppen wie beispielsweise Hydroxyl-Gruppen bei Raumtemperatur, d.h. bei einer Temperatur von 18 bis 23°C beständig ist, bei erhöhten Temperaturen, beispielsweise bei ≥ 80°C, noch bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°C, aber reagiert. Bei der Herstellung der blockierten Polyisocyanate können beliebige für die Vernetzung geeignete organische Polyisocyanate verwendet werden. Als Polyisocyanate wie beispielsweise als Diisocyanate werden bevorzugt (hetero)aliphatische, (hetero)cycloaliphatische, (hetero)aromatische oder (hetero)aliphatisch-(hetero)aromatische Diisocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,3-Bis(1-isocyanato-1-methylethyl)benzol, Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Naphthylendiisocyanat, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Ganz besonders bevorzugt sind 2,4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI) und/oder 1,6-Hexamethylendiisocyanat (HDI). Insbesondere bevorzugt ist HDI als zur Herstellung des Polyurethan-Harzes eingesetztes Polyisocyanat.

Ebenfalls als geeignete Vernetzungsmittel (A2) einsetzbar sind in Wasser lösbare oder dispergierbare Melamin-Harze, vorzugsweise Melamin-Formaldehyd-Kondensationsprodukte, insbesondere gegebenenfalls veretherte (alkylierte wie beispielsweise C₁-C₆-alkylierte) Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Besonders bevorzugt sind mit wenigstens einem C₁₋₆-Alkohol, vorzugsweise mit wenigstens einem C₁₋₄-Alkohol, insbesondere mit Methanol veretherte (methylierte) Melaminharze wie Melamin-Formaldehyd-Kondensationsprodukte. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

In einer bevorzugten Ausführungsform ist das Vernetzungsmittel (A2) der erfindungsgemäßen Beschichtungszusammensetzung wenigstens ein in Wasser lösbares oder dispergierbares Melamin-Harz, vorzugsweise wenigstens ein in Wasser lösbares oder dispergierbares Melamin-Formaldehyd-Kondensationsprodukt, insbesondere wenigstens ein in Wasser lösbares oder dispergierbares verethertes (alkyliertes), vorzugsweise methyliertes Melamin-Formaldehyd-Kondensationsprodukt.

Vorzugsweise enthält die wässrige Beschichtungszusammensetzung das Vernetzungsmittel (A2) in einer Menge von 1 bis 20 Gew.-%, vorzugsweise in einer Menge von 2,5 bis 15 Gew.-%, besonders bevorzugt in einer Menge von 3 bis 10 Gew.-%, bezogen auf das Gesamtgewicht der wässrigen Beschichtungszusammensetzung.

Vorzugsweise enthält die erfindungsgemäße Beschichtungszusammensetzung wenigstens ein polymeres Harz (A1) ausgewählt aus der Gruppe bestehend aus jeweils funktionelle Hydroxyl-Gruppen aufweisenden Polyurethanen, Polyestern, Epoxidharzen und Poly(meth)acrylaten, und als gegebenenfalls vorhandenes Vernetzungsmittel (A2) wenigstens ein gegebenenfalls alkyliertes Melamin-Formaldehyd-Kondensationsprodukt.

Vorzugsweise liegt das relative Gewichtsverhältnis des wenigstens einen polymeren Harzes (A1) und des gegebenenfalls vorhandenen wenigstens einen Vernetzungsmittels (A2) in der erfindungsgemäßen Beschichtungszusammensetzung zueinander in einem Bereich von 6:1 bis 1:1, besonders bevorzugt in einem Bereich von 4:1 bis 1,1:1, ganz besonders bevorzugt in einem Bereich von 2,5:1 bis 1,1:1, insbesondere in einem Bereich von 2,2:1 bis 1,1:1, jeweils bezogen auf den Festkörper-Anteil des wenigstens einen polymeren Harzes (A1) und des wenigstens einen Vernetzungsmittels (A2) innerhalb der erfindungsgemäßen Beschichtungs-zusammensetzung.

Die Auswahl und Kombination von geeigneten polymeren Harzen (A1) und gegebenenfalls vorhandenen Vernetzungsmitteln erfolgt je nach den gewünschten und/oder erforderlichen Eigenschaften des herzustellenden Beschichtungssystems. Eine weiteres Auswahlkriterium sind die gewünschten und/oder erforderlichen Härtungsbedingungen, insbesondere die Härtungstemperaturen (Vernetzungstemperaturen). Wie eine solche Auswahl zu treffen ist, ist dem Fachmann auf dem Gebiet der Lackiertechnik bekannt und kann von diesem entsprechend angepasst werden. Möglich sind dabei die an sich bekannten EinKomponenten sowie Zwei-Komponenten-Beschichtungssysteme (vergleiche hierzu auch Römpp-Lexikon Lacke und Druckfarben, Georg Thieme Verlag, Stuttgart, New York, 1998, Seiten 274-276, sowie Seiten 641-642). Bevorzugt kommen EinKomponenten Systeme zum Einsatz.

### Pigment (B) und gegebenenfalls vorhandenes Additiv (D)

Die erfindungsgemäße Beschichtungszusammensetzung enthält wenigstens ein Pigment als Komponente (B).

Der Begriff "Pigment" ist dem Fachmann bekannt, beispielsweise aus der DIN 55945 (Datum: Oktober 2001). Unter einem "Pigment" werden im Sinne der vorliegenden Erfindung vorzugsweise pulver- oder plättchenförmige Verbindungen verstanden, die in dem sie umgebenden Medium, wie beispielsweise in der erfindungsgemäßen Beschichtungszusammensetzung im Wesentlichen, vorzugsweise vollständig, unlöslich sind. Von "Füllstoffen" unterscheiden sich Pigmente vorzugsweise durch ihren Brechungsindex, der für Pigmente ≥1,7 beträgt.

Vorzugsweise ist ein solches Pigment ausgewählt aus der Gruppe bestehend aus organischen und anorganischen, farbgebenden und füllenden Pigmenten. Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Als in der wässrigen Beschichtungszusammensetzung enthaltene Pigmente (B) können zudem Effektpigmente eingesetzt werden. Ein Fachmann ist mit dem Begriff der Effektpigmente vertraut. Insbesondere handelt es sich bei Effektpigmenten um solche Pigmente sind, die optisch effektgebend oder farb- und optisch effektgebend, insbesondere optisch effektgebend sind. Eine entsprechende Einteilung der Pigmente kann nach DIN 55944 (Datum: Dezember 2011) erfolgen. Vorzugsweise werden die Effektpigmente aus der Gruppe bestehend aus organischen und anorganischen, optisch effektgebenden, farb- und optisch effektgebenden, Pigmenten, ausgewählt. Bevorzugt werden sie aus der Gruppe bestehend aus organischen und anorganischen, optisch effektgebenden oder farb- und optisch effektgebenden Pigmenten, ausgewählt. Insbesondere werden die organischen und anorganischen, optisch effektgebenden und farb- und optisch effektgebenden Pigmente aus der Gruppe bestehend aus gegebenenfalls beschichteten Metalleffektpigmenten, aus gegebenenfalls beschichteten Metalloxideffektpigmenten, aus aus gegebenenfalls beschichteten Metallen und Nichtmetallen zusammengesetzten Effektpigmenten und gegebenenfalls beschichteten nichtmetallischen Effektpigmenten ausgewählt. Insbesondere sind die gegebenenfalls beschichteten wie z.B. silikatbeschichteten Metalleffektpigmente Aluminiumeffektpigmente, Eiseneffektpigmente oder Kupfereffektpigmente. Ganz besonders bevorzugt sind gegebenenfalls beschichtete wie z.B. silikatbeschichtete Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan. Die erfindungsgemäß eingesetzten Effektpigmente, insbesondere gegebenenfalls beschichtete wie z.B. silikatbeschichteten Aluminiumeffektpigmente, können in jeder üblichen dem Fachmann bekannten Form wie z.B. einer Blättchen- und/oder einer Plättchenform, insbesondere einer (Corn)flake- oder einer Silverdollar-Form vorliegen. Insbesondere sind die aus Metallen und Nichtmetallen zusammengesetzten Effektpigmente mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen. Insbesondere sind die nichtmetallischen Effektpigmente Perlglanzpigmente, insbesondere Micapigmente; mit Metalloxiden beschichtete, plättchenförmige Graphitpigmente; Interferenzpigmente, die keine Reflektorschicht aus Metall enthalten und einen starken Farbflop aufweisen; plättchenförmige Effektpigmente auf der Basis von Eisenoxid, die einen Farbton von Rosa bis Braunrot aufweisen; oder organische, flüssigkristalline Effektpigmente. Ergänzend wird hinsichtlich der erfindungsgemäß eingesetzten Effektpigmente auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Der Pigment-Gehalt an Pigment (B) in den erfindungsgemäßen wässrigen Beschichtungszusammensetzungen kann variieren. Vorzugsweise liegt der Pigment-Gehalt, bezogen auf das Gesamtgewicht der erfindungsgemäßen wässrigen Beschichtungszusammensetzung im Bereich von 0,1 bis 50 Gew.-%, bevorzugt im Bereich von 0,5 bis 45 Gew.-%, besonders bevorzugt im Bereich von 1,0 bis 40 Gew.-%, ganz besonders bevorzugt im Bereich von 2,0 bis 35 Gew.-% und insbesondere im Bereich von 3,0 bis 25 Gew.-%.

Die erfindungsgemäße Beschichtungszusammensetzung kann je nach erwünschter Anwendung ein oder mehrere üblicherweise eingesetzte Additive als Komponente (D) enthalten.

Vorzugsweise sind diese Additive (D) ausgewählt aus der Gruppe bestehend aus Antioxidantien, Antistatika, Netz- und Dispergiermitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder WärmeStabilisatoren, Prozess-Stabilisatoren und UV- und/oder Licht-Stabilisatoren, Flammschutzmitteln, Lichtschutzmitteln, Entlüftern, Inhibitoren wie Polymerisationsinhibitoren, Katalysatoren, Wachsen, Netz- und Dispergiermitteln, Flexibilisierungsmitteln, Flammschutzmitteln, Reaktivverdünnern, Rheologiehilfsmitteln, Trägermedien, Wachse, Hydrophobierungsmitteln, Hydrophilierungsmitteln, Verdickern, Thixotropiermitteln, Schlagzähmachern, Blähmitteln, Prozesshilfsmitteln, Weichmachern, Füllstoffen, Glasfasern und Verstärkern, und Gemischen aus den vorstehend genannten weiteren Additiven. Der Additiv-Gehalt an Additiv (D) in der erfindungsgemäßen Beschichtungszusammensetzung kann variieren. Vorzugsweise liegt der Gehalt, bezogen auf das Gesamtgewicht der erfindungsgemäßen Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

Der Begriff "Füllstoff" ist dem Fachmann bekannt, beispielsweise aus der DIN 55945 (Datum: Oktober 2001). Unter einem "Füllstoff" wird im Sinne der vorliegenden Erfindung vorzugsweise eine in der erfindungsgemäßen Beschichtungszusammensetzung im Wesentlichen, vorzugsweise vollständig, unlösliche Substanz verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt. Jeder übliche dem Fachmann bekannte Füllstoff kann als Komponente (D) eingesetzt werden. Beispiele geeigneter Füllstoffe sind Kaolin, Dolomit, Calcit, Kreide, Calciumsulfat, Bariumsulfat, Graphit, Silikate wie Magnesiumsilikate,, insbesondere entsprechende Schichtsilikate wie Hectorit, Bentonit, Montmorillonit, Talkum und/oder Glimmer, Kieselsäuren, insbesondere pyrogene Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

### Erfindungsgemäßes Copolymer als Komponente (C)

Die erfindungsgemäße Beschichtungszusammensetzung enthält das erfindungsgemäße Copolymer als Komponente (C). Vorzugsweise enthält die erfindungsgemäße Beschichtungszusammensetzung das als Haftungs-vermittelndes Additiv eingesetzte Copolymer (C) in einer Menge in einem Bereich von 0,5 bis 15 Gew.-%, besonders bevorzugt in einer Menge in einem Bereich von 1,0 bis 10 Gew.-%, ganz besonders bevorzugt in einer Menge in einem Bereich von 1,5 bis 9 Gew.-%, insbesondere in einer Menge in einem Bereich von 2,0 bis 8 Gew.-%, jeweils bezogen auf den gesamten Festkörperanteil der Beschichtungszusammensetzung.

Die erfindungsgemäße Beschichtungszusammensetzung enthält vorzugsweise
das wenigstens eine polymere Harz (A1) in einer Menge in einem Bereich von 7,5 bis 30 Gew.-%, bezogen auf das Gesamtgewicht der Beschichtungszusammensetzung,
das gegebenenfalls vorhandene wenigstens eine Vernetzungsmittel (A2) in einer Menge in einem Bereich von 2,5 bis 15 Gew.-%, bezogen auf das Gesamtgewicht der Beschichtungszusammensetzung, und
das wenigstens eine Pigment (B) in einer Menge in einem Bereich von 0,5 bis 20 Gew.-%, bezogen auf das Gesamtgewicht der Beschichtungszusammensetzung, enthält,
wobei sich die Mengen der in der Beschichtungszusammensetzung enthaltenen Komponenten Wasser, (A1), (B), (C) sowie gegebenenfalls wenigstens einer weiteren darin enthaltener Komponente (D) und/oder (A2), und/oder gegebenenfalls darin vorhandener organischer Lösemittel auf insgesamt 100 Gew.-% addieren,
insbesondere wenn das wenigstens eine als Haftungs-vermittelndes Additiv eingesetzte Copolymer (C) in einer Menge in einem Bereich von 0,5 bis 15 Gew.-%, bezogen auf den gesamten Festkörperanteil der Beschichtungszusammensetzung, vorhanden ist.

### Verfahren zur Herstellung der erfindungsgemäßen Beschichtungszusammensetzung

Ein weiterer Gegenstand der vorliegenden Erfindung ist ein Verfahren zur Herstellung der erfindungsgemäßen Beschichtungszusammensetzung. Das erfindungsgemäße Verfahren umfasst wenigstens den Schritt des Mischens der Komponenten Wasser, (A1), gegebenenfalls (A2), (B) und (C) und gegebenenfalls weiterer Komponenten wie (D) und/oder organischer Lösemittel.

Die Herstellung der erfindungsgemäßen Beschichtungszusammensetzung weist methodisch gesehen keine Besonderheiten auf, sondern erfolgt nach den üblichen und bekannten Methoden. Der Schritt des Mischens des erfindungsgemäßen Verfahrens wird vorzugsweise mittels eines Schnellrührers, Rührkessels oder Dissolvers wie zum Beispiels eines In-Line-Dissolvers durchgeführt.

### Verwendung der erfindungsgemäßen Beschichtungszusammensetzung

Ein weiterer Gegenstand der vorliegenden Erfindung ist eine Verwendung der erfindungsgemäßen Beschichtungszusammensetzung zur zumindest teilweisen Beschichtung eines Substrats mit einer Basislackschicht.

Alle im Zusammenhang mit der erfindungsgemäßen Beschichtungszusammensetzung und dem erfindungsgemäßen, als Haftungs-vermittelndes Additiv eingesetzten, Copolymeren hierin zuvor beschriebene bevorzugte Ausführungsformen sind auch bevorzugte Ausführungsformen der erfindungsgemäßen Beschichtungszusammensetzung hinsichtlich ihrer Verwendung zur zumindest teilweisen Beschichtung eines Substrats mit einer Basislackschicht.

### Zumindest teilweise beschichtetes Substrat

Ein weiterer Gegenstand der vorliegenden Erfindung ist ein zumindest teilweise mit der erfindungsgemäßen Beschichtungszusammensetzung beschichtetes Substrat. Als Substrate werden vorzugsweise die schon zuvor genannten Kunststoffsubstrate eingesetzt, d.h. Substrate aus oder basierend auf wenigstens einem Kunststoff.

Die zumindest teilweise beschichteten Substrate eignen sich für das ästhetisch und technisch anspruchsvolle Gebiet der Fahrzeuglackierung, insbesondere der Automobillackierung. Die zumindest teilweise beschichteten Substrate wie Kunststoffsubstrate, insbesondere die mit einer gemäß dem erfindungsgemäßen Verfahren erhaltenen Mehrschichtlackierung zumindest teilweise beschichteten Substrate wie Kunststoffsubstrate, können als Fahrzeugteile und Fahrzeuganbau- und -zubehörteile sowohl für den Innen- als auch im Außenbereich von Fahrzeugen verwendet werden. Neben einer hervorragenden Haftung der hergestellten Beschichtungen beziehungsweise Mehrschichtlackierungen, lässt sich zudem ein guter und variabler dekorativer Effekt erzielen.

### Verfahren zur zumindest teilweisen Beschichtung eines Substrats mit einer Basislackschicht

Ein weiterer Gegenstand der vorliegenden Erfindung ist ein Verfahren zur zumindest teilweisen Beschichtung eines Substrats mit einer Basislackschicht umfassend wenigstens einen Schritt (1),
(1) zumindest teilweises Kontaktieren des Substrats mit der erfindungsgemäßen Beschichtungszusammensetzung.

Alle im Zusammenhang mit der erfindungsgemäßen Beschichtungszusammensetzung und dem erfindungsgemäßen, als Haftungs-vermittelndes Additiv eingesetzten, Copolymeren hierin zuvor beschriebene bevorzugte Ausführungsformen sind auch bevorzugte Ausführungsformen der erfindungsgemäßen Beschichtungszusammensetzung hinsichtlich ihres Einsatzes in dem erfindungsgemäßen Verfahren zur zumindest teilweisen Beschichtung eines Substrats mit einer Basislackschicht.

Die Applikation der erfindungsgemäßen wässrigen Beschichtungszusammensetzung auf ein Substrat wie ein Kunststoffsubstrat, d.h. das Kontaktieren gemäß Schritt (1), kann durch alle üblichen Applikationsmethoden, wie beispielsweise Spritzen, Rakeln, Streichen, Gießen, Tauchen, Tränken, Träufeln oder Walzen, vorzugsweise durch Spritzapplikation, erfolgen. Dabei kann das zu beschichtende Substrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Applikation der erfindungsgemäßen wässrigen Beschichtungszusammensetzung erfolgt in den üblichen und bekannten Schichtdicken, beispielsweise in Nassfilmschichtdicken von 10 bis 200 Mikrometer, vorzugsweise von 50 bis 150 Mikrometer. Die dabei resultierenden Trockenfilmschichtdicken nach der Härtung liegen dann beispielsweise im Bereich von 2 bis 40 Mikrometer, insbesondere 5 bis 20 Mikrometer.

Ein weiterer Gegenstand der vorliegenden Erfindung ist eine Basislackschicht erhältlich nach dem erfindungsgemäßen Verfahren.

### Verfahren zur zumindest teilweisen Beschichtung eines Substrats mit einer Mehrschichtlackierung

Ein weiterer Gegenstand der vorliegenden Erfindung ist ein Verfahren zur zumindest teilweisen Beschichtung eines Substrats mit einer Mehrschichtlackierung umfassend wenigstens die Schritte
(1) zumindest teilweises Kontaktieren des Substrats mit der Beschichtungszusammensetzung gemäß einem der Ansprüche 7 bis 10 zum zumindest teilweisem Aufbringen einer Basislackschicht auf das Substrat und
(2) Aufbringen einer weiteren Schicht, vorzugsweise einer Klarlackschicht, auf die nach Schritt (1) aufgebrachte Basislackschicht.

Alle im Zusammenhang mit der erfindungsgemäßen Beschichtungszusammensetzung und dem erfindungsgemäßen, als Haftungs-vermittelndes Additiv eingesetzten, Copolymeren hierin zuvor beschriebene bevorzugte Ausführungsformen sind auch bevorzugte Ausführungsformen der erfindungsgemäßen Beschichtungszusammensetzung hinsichtlich ihres Einsatzes in dem erfindungsgemäßen Verfahren zur zumindest teilweisen Beschichtung eines Substrats mit einer Mehrschichtlackierung.

Üblicherweise wird auf der gemäß Schritt (1) applizierten Basislackschicht eine weitere Schicht, insbesondere eine Klarlackschicht aufgebracht. Bevorzugt wird die Basislackschicht vor der vor der Applikation des Klarlacks gemäß Schritt (2) getrocknet. Unter dem Begriff "Trocknen" ist im Rahmen der vorliegenden Erfindung vorzugsweise das Entfernen von Lösungsmittel aus dem applizierten Lack zu verstehen. Je nach Beschaffenheit des Bindemittels kann es hier natürlich bereits zum Auftreten von Vernetzungsreaktionen führen. Die Vernetzung ist aber noch nicht vollständig. Das heißt, es entsteht hierbei keine ausgehärtete Lackschicht. Das Trocknen kann zunächst bei Raumtemperatur (20 bis 23°C) für 5 bis 30, bevorzugt 10 bis 20 Minuten und anschließend bei Temperaturen von 30 bis 90°C, insbesondere 50 bis 80 °C für ebenfalls 5 bis 30, bevorzugt 10 bis 20 Minuten erfolgen.

Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Kunststofflackierung üblich verwendeten Klarlacke, deren Auswahl und Einsatz dem Fachmann bekannt ist (vergleiche hierzu auch Römpp-Lexikon Lacke und Druckfarben, Georg Thieme Verlag, Stuttgart, New York, 1998, Seite 325).

Die generellen Applikationsmethoden des Klarlacks entsprechen denen, wie sie weiter oben für den Basislack beschrieben wurden. Die Applikation des Klarlacks erfolgt in den üblichen und bekannten Schichtdicken, beispielsweise in Nassfilmschichtdicken von 50 bis 250 Mikrometer, vorzugsweise von 100 bis 180 Mikrometer. Die dabei resultierenden Trockenfilmschichtdicken nach der Härtung liegen dann beispielsweise im Bereich von 15 bis 80 Mikrometer, insbesondere 25 bis 50 Mikrometer.

Die Härtung von Basislack (aufgetragen gemäß Schritt (1)) und Klarlack (aufgetragen gemäß Schritt (2)) erfolgt vorzugsweise gemeinsam. Diese weist keine methodischen Besonderheiten auf, sondern erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Substrate oder nach der Wahl der eingesetzten Bindemittel. So kann die Härtung zum Beispiel im Bereich der Raumtemperatur (20 bis 23°C) oder auch bei erhöhten Temperaturen im Bereich von beispielsweise 40°C bis 120°C, bevorzugt von 60°C bis 90°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 bis 120 Minuten, bevorzugt 10 Minuten bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten. Welche Härtungsbedingungen bei welchen Substraten und/oder Beschichtungszusammensetzungen anzuwenden sind, gehört zum allgemeinen Fachwissen auf dem Gebiet, sodass die Bedingungen vom Fachmann angepasst und ausgewählt werden können.

Ein weiterer Gegenstand der vorliegenden Erfindung ist eine Mehrschichtlackierung erhältlich nach dem erfindungsgemäßen Verfahren.

### Bestimmungsmethoden

### 1. Bestimmung des nicht-flüchtigen Anteils:

Die Bestimmung des nicht-flüchtigen Anteils (Festkörperanteils) erfolgt gemäß DIN EN ISO 3251 (Datum: 1.6.2008). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

### 2. Bestimmung der Säurezahl:

Die Bestimmung der Säure-Zahl erfolgt gemäß DIN EN ISO 2114 (Datum: Juni 2002), wobei "Verfahren A" eingesetzt wird. Die angegebene Säure-Zahl entspricht dabei der in der DIN Norm angegebenen Gesamtsäurezahl. Dabei werden die in der Probe enthaltenen freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g der zu untersuchenden Verbindung unter den in DIN EN ISO 2114 festgelegten Bedingungen erforderlich ist.

### 3. Bestimmung der OH-Zahl (Hydroxyl-Zahl):

Die Bestimmung der OH-Zahl erfolgt gemäß DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zu Essigsäure umgesetzt und die gesamte Essigsäure mit ethanolischer KOH zurücktitriert. Die OH-Zahl gibt die Menge KOH in mg an, die der bei der Acetylierung von 1 g der zu untersuchenden Verbindung gebundenen Menge Essigsäure äquivalent ist.

### 4. Bestimmung des zahlenmittleren und des gewichtsmittleren Molekulargewichts:

Die Bestimmung des zahlenmittleren (Mₙ) und des gewichtsmittleren Molekulargewichts (M_{w}) erfolgt mittels Gelpermeationschromatographie (GPC) mit Tetrahydrofuran als Elutionsmittel und unter Verwendung eines Polystyrol-Standards und ist angelehnt an DIN 55672-1 (Datum: August 2007). Als Säulenmaterial wird ein Styrol-Divinylbenzol-Copolymer eingesetzt. Mit dieser Methode kann zudem die Polydispersität (Verhältnis von gewichtsmittlerem Molekulargewicht (M_{w}) zu zahlenmittlerem Molekulargewicht (Mₙ)) bestimmt werden.

### 5. Bestimmung der Haftung

Die Haftung zwischen einer auf dem eingesetzten Substrat aufgetragenen Basislackschicht (erhältlich durch Aufbringen der erfindungsgemäßen Beschichtungszusammensetzung oder einer Vergleichsbeschichtungszusammensetzung auf ein Substrat) und dem Substrat selbst kann mittels der nachfolgend beschriebenen Methode bestimmt und bewertet werden.

Es wird ein Dampfstrahltest gemäß DIN EN ISO 55662 (Datum: Dezember 2009) durchgeführt. Anschließend erfolgt eine Bewertung mittels eines Notensystems.

Ein Dampfstrahl wird eine Minute lang bei einer Temperatur von 60°C mit 67 bar in einer Entfernung von 10 cm senkrecht auf das zu untersuchende beschichtete Substrat gerichtet. Anschließend erfolgt eine Bewertung der Haftung über ein Notensystem mit den Noten 0 bis 5, wobei die Note 0 für Beschichtungen vergeben wird, die nach der Dampfstrahlbehandlung keine sichtbaren Spuren aufweisen (sehr gute Haftung) und die Note 5 für Beschichtungen vergeben wird, die nach dem Dampfstrahltest deutlich abgelöste Bereiche aufwiesen (ungenügende Haftung).

Optional kann das zu untersuchende beschichtete Substrat vor Durchführung des Dampfstrahltests gemäß DIN EN ISO 55662 einer Bewitterung in einer Klimakammer ausgesetzt werden, d.h. einer Lagerung unter Konstant-Klima-Bedingungen gemäß DIN EN ISO 6270-2 CH; Datum: September 2005) unterworfen werden. Dabei werden die untersuchenden beschichteten Substrate 10 Tage in der Klimakammer bei 100 % Luftfeuchtigkeit und 40 °C gelagert. Anschließend wird die Haftung der Proben 24 h nach Entnahme aus der Klimakammer mittels des vorstehend beschriebenen Dampfstrahltest untersucht und anschließend die Haftung mittels des vorstehend beschriebenen Notensystems bewertet.

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

### 1. Herstellung von erfindungsgemäßen Beschichtungszusammensetzungen und Vergleichsbeschichtungszusammensetzungen

### 1.1 Herstellung von erfindungsgemäßen Copolymeren

### Copolymer 1

Das Copolymer 1 wird ausgehend von den in nachstehender Tabelle 1 angegebenen Komponenten hergestellt.

**Tabelle 1:**

| **Position** | **Zur Herstellung von Copolymer 1 eingesetzte Komponenten** | **Gewichtsteile** |
|---|---|---|
| 1 | Methylethylketon (MEK) | 47,31 |
| 2 | **Initiator 1**: Tert.-Butylperoxy-2-ethylhexanoat (TBPEH) | 3,23 |
| 3 | **Monomere 1:** | |
| | n-Butylacrylat | 6,65 |
| | Styrol | 8,40 |
| | 2-Hydroxyethylacrylat | 5,38 |
| | Acrylsäure | 1,08 |
| 4 | **Initiator 2:** | |
| | Tert.-Butylperoxy-2-ethylhexanoat (TBPEH) | 3,23 |
| 5 | **Monomere 2:** | |
| | n-Butylacrylat | 8,73 |
| | Styrol | 9,12 |
| | Misch1 | 4,30 |
| | C17A | 2,15 |
| | Acrylsäure | 0,43 |
| 6 | Dimethylethanolamin | 0,63 |
| 7 | n-Butylglykol | 5,98 |
| 8 | Deionisiertes Wasser | 53,87 |

Misch1 ist eine von der Firma BASF kommerziell erhältliche Monomeren-Mischung, die 25 Gew.-% Ureidomethylmethacrylat (UMA) und 75 Gew.-% Methylmethacrylat enthält. C17A ist ein Monomer, welches eine Acrylat-Gruppe aufweist, an die ein verzweigter C₁₇-Alkyl-Rest gebunden ist.

In einem Reaktor wird die Position 1 vorgelegt und auf 75°C erhitzt. Bei dieser Temperatur wird begonnen, die Positionen 2 und 3 hinzuzugeben. Dabei wird Position 3 über eine Dauer von 2 Stunden und Position 2 über eine Dauer von 2,5 Stunden gleichmäßig zudosiert. Nach Abschluss der 2,5 Stunden wird für eine Dauer von 30 Minuten nachpolymerisiert. Zu dieser Mischung werden dann die Positionen 4 und 5 gegeben, wobei Position 5 über eine Dauer von 2 Stunden und Position 4 über eine Dauer von 2,5 Stunden gleichmäßig zudosiert wird. Nach Abschluss der 2,5 Stunden wird für eine Dauer von 30 Minuten nachpolymerisiert.

Die nach Zugabe der Positionen 6 und 7 erhaltene Mischung weist einen Festkörpergehalt von 49,5 Gew.-%, eine Säure-Zahl von 22,3 mg KOH pro g Festkörper dieser Mischung und eine OH-Zahl von 54 mg KOH pro g Festkörper dieser Mischung auf. Nach Zugabe der Position 8 wird eine wässrige Dispersion erhalten, die einen pH-Wert von 9,1 und einen Festkörpergehalt von 24,6 Gew.-% aufweist. Das in der wässrigen Dispersion enthaltene Copolymer 1 weist ein zahlenmittleres Molekulargewicht von 4 639 g/mol und ein gewichtsmittleres Molekulargewicht von 18 590 g/mol auf.

Die so erhaltene wässrige Dispersion des Copolymeren 1 wird wie unter nachfolgendem Punkt **1.3** beschrieben eingesetzt.

### Copolymer 2

Das Copolymer 2 wird ausgehend von den in nachstehender Tabelle 2 angegebenen Komponenten hergestellt.

Bei Sipomer WAM II handelt es sich um Methacrylamidoethylethylenharnstoff, ein kommerziell erhältliches Monomer der Firma Rhodia.

**Tabelle 2:**

| **Position** | **Zur Herstellung von Copolymer 2 eingesetzte Komponenten** | **Gewichtsteile** |
|---|---|---|
| 1 | Methylethylketon (MEK) | 48,89 |
| 2 | **Initiator 1:** | |
| | Tert.-Butylperoxy-2-ethylhexanoat (TBPEH) | 3,33 |
| 3 | **Monomere 1:** | |
| | n-Butylacrylat | 6,87 |
| | Styrol | 8,68 |
| | 2-Hydroxyethylacrylat | 5,56 |
| | Acrylsäure | 1,11 |
| 4 | **Initiator 2:** | |
| | Tert.-Butylperoxy-2-ethylhexanoat (TBPEH) | 3,33 |
| 5 | **Monomere 2:** | |
| | n-Butylacrylat | 10,13 |
| | Styrol | 9,43 |
| | Sipomer WAM II | 1,11 |
| | C17A | 1,11 |
| | Acrylsäure | 0,44 |
| 6 | Dimethylethanolamin | 0,63 |
| 7 | n-Butylglykol | 5,98 |
| 8 | Deionisiertes Wasser | 53,87 |

In einem Reaktor wird die Position 1 vorgelegt und auf 75°C erhitzt. Bei dieser Temperatur wird begonnen, die Positionen 2 und 3 hinzuzugeben. Dabei wird Position 3 über eine Dauer von 2 Stunden und Position 2 über eine Dauer von 2,5 Stunden gleichmäßig zudosiert. Nach Abschluss der 2,5 Stunden wird für eine Dauer von 30 Minuten nachpolymerisiert. Zu dieser Mischung werden dann die Positionen 4 und 5 gegeben, wobei Position 5 über eine Dauer von 2 Stunden und Position 4 über eine Dauer von 2,5 Stunden gleichmäßig zudosiert wird. Nach Abschluss der 2,5 Stunden wird für eine Dauer von 30 Minuten nachpolymerisiert.

Die nach Zugabe der Positionen 6 und 7 erhaltene Mischung weist einen Festkörpergehalt von 48,7 Gew.-%, eine Säure-Zahl von 31,2 mg KOH pro g Festkörper dieser Mischung und eine OH-Zahl von 60 mg KOH pro g Festkörper dieser Mischung auf. Nach Zugabe der Position 8 wird eine wässrige Dispersion erhalten, die einen pH-Wert von 7,6 bis 9,1 und einen Festkörpergehalt von 23 bis 28 Gew.-% aufweist. Das in der wässrigen Dispersion enthaltene Copolymer 2 weist ein zahlenmittleres Molekulargewicht von 4 071 g/mol und ein gewichtsmittleres Molekulargewicht von 13 540 g/mol auf.

Die so erhaltene wässrige Dispersion des Copolymeren 2 wird wie unter nachfolgendem Punkt **1.3** beschrieben eingesetzt.

### Copolymer 3

Das Copolymer 3 wird analog Copolymer 1 hergestellt, mit dem Unterschied, dass anstelle von C17A ein Monomer C13A eingesetzt wird. Bei dem Monomer C13A handelt es sich um ein Monomer, welches eine Acrylat-Gruppe aufweist, an die ein verzweigter C₁₃-Alkyl-Rest gebunden ist.

### 1.2 Herstellung von nicht-erfindungsgemäßen Copolymeren (Vergleichs-Copolymeren)

Es werden insgesamt zwei verschiedene nicht-erfindungsgemäße Copolymere (Vergleichs-Copolymere) VC1 und VC2 hergestellt.

Die Copolymere VC1 und VC2 werden analog Copolymer 1 hergestellt, mit dem Unterschied, dass anstelle von C17A im Fall von VC1 ein Monomer C9A und im Fall von VC2 ein Monomer C16C18A eingesetzt wird. Bei dem Monomer C9A handelt es sich um ein Monomer, welches eine Acrylat-Gruppe aufweist, an die ein verzweigter C₉-Alkyl-Rest gebunden ist. Bei dem Monomer C16C18A handelt es sich um eine Mischung zweier Monomere, welche jeweils eine Acrylat-Gruppe aufweisen, an die entweder ein linearer (unverzweigter) C₁₆-Alkyl-Rest oder ein linearer (unverzweigter) C₁₈-Alkyl-Rest gebunden ist.

### 1.3 Herstellung von erfindungsgemäßen Beschichtungszusammensetzungen

Die wässrige Dispersion enthaltend das erfindungsgemäße Copolymer 1 bzw. die wässrige Dispersion enthaltend das erfindungsgemäße Copolymer 2 bzw. die wässrige Dispersion enthaltend das erfindungsgemäße Copolymer 3 werden jeweils zur Herstellung von erfindungsgemäßen wässrigen Beschichtungszusammensetzungen eingesetzt, welche jeweils zur Herstellung einer Basislackschicht auf einem Substrat geeignet sind.

Dabei werden zunächst insgesamt drei wässrige Basislacke 1, 2 und 3 unter Einsatz der in nachstehender Tabelle 3 genannten Komponenten in der in Tabelle 3 angegebenen Reihenfolge hergestellt. Die Angabe in Gew.-% im Zusammenhang mit jeder der Komponenten bezieht sich jeweils auf das Gesamtgewicht des jeweiligen wässrigen Basislacks 1, 2 oder 3.

Laponite RD ist ein handelsübliches Thixotropierungsmittel. Pluriol P900 ist ein handelsübliches Polyethylenglykol. Viscalex HV 30 ist ein handelsübliches Rheologiehilfsmittel. Foamstar MF324 ist ein handelsüblicher Entschäumer. Cymel 327 und 1133 sind handelsübliche Melaminformaldehydharze. Pigmentpaste 1 ist eine 10%-ige (Gew.-%) Dispersion des Pigments "Russ Monarch 1400" in Wasser. Pigmentpaste 2 ist eine 50%-ige (50 Gew.-%) Dispersion des Pigments "Titanrutil 2310" in Wasser. Pigmentpaste 3 ist eine polyacrylat-basierte blaue Tönpaste. Pigmentpaste 4 ist eine polyacrylat-basierte weiße Tönpaste. Pigmentpaste 5 ist eine polyester-basierte schwarze Tönpaste. Pigmentpaste 6 ist eine polyacrylat-basierte rote Tönpaste. Als Aluminium-Effektpigment wird eine Dispersion mit einem Festkörpergehalt von 65 Gew.-% eingesetzt. Dimethylethanolamin wird in Form einer wässrigen Lösung (10% Gew.-% in Wasser) eingesetzt. Parocryl VP 567750 ist eine handelsübliche Dispersion eines OH-funktionellen Acrylatharzes in organischen Lösemitteln.

**Tabelle 3: Herstellung der wässrigen Basislacke 1 bis 3:**

| **Zur Herstellung der Basislacke 1 bis 3 eingesetzte Komponenten** | **Menge Basislack 1 [Gew.-%]** | **Menge Basislack 2 [Gew.-%]** | **Menge Basislack 3 [Gew.-%]** |
|---|---|---|---|
| Laponite RD | 19,20 | 32,99 | 19,72 |
| Wasser | 9,82 | 13,68 | 18,21 |
| Handelsübliche Dispersion eine OH-funktionellen Polyurethanharzes (Wassergehalt: 66,0 Gew.-%, Gehalt an organischen Lösemitteln: 6,3 Gew.-%) | 32,96 | 15,09 | 17,21 |
| Handelsübliche Dispersion eine OH-funktionellen Polyesterharzes (Wassergehalt: 17,7 Gew.-%, Gehalt an organischen Lösemitteln: 20,0 Gew.-%) | 3,17 | 7,70 | 5,60 |
| n-Butoxypropanol | 2,11 | - | - |
| n-Butylglykol | - | 4,05 | 6,60 |
| Handelsübliches Melaminformaldehydharz (Isobutyl-/Methyl-verethert; 93 Gew.-% Festkörpergehalt) | - | - | 4,58 |
| Cymel 327 | 4,40 | - | - |
| Cymel 1133 | - | 3,54 | - |
| TMDD BG 52 (handelsübliches Netzmittel) | 0,53 | - | - |
| TMDD BG 54 (handelsübliches Netzmittel) | - | 2,02 | - |
| Dimethylethanolamin | 1,58 | - | - |
| Handelsübliche Dispersion eine OH-funktionellen Acrylatharzes (Wassergehalt: 49,5 Gew.-%, Gehalt an organischen Lösemitteln: 13,0 Gew.-%) | 5,38 | - | - |
| Parocryl VP 567750 | - | 5,17 | 4,40 |
| Foamstar MF324 | 0,53 | - | - |
| Ethylhexanol | 4,22 | - | 1,56 |
| BYK 347 (handelsübliches Netzmittel) | 0,53 | - | - |
| BYK 346 (handelsübliches Netzmittel) | - | - | 0,66 |
| Pluriol P900 | 2,11 | 1,01 | 1,79 |
| Isopropanol | 2,32 | - | - |
| Viscalex HV 30 | 0,42 | 4,00 | - |
| Pigmentpaste 1 | 10,68 | - | - |
| Pigmentpaste 2 | 0,04 | - | - |
| Pigmentpaste 3 | - | 0,04 | - |
| Pigmentpaste 4 | - | 0,20 | - |
| Pigmentpaste 5 | - | - | 0,89 |
| Pigmentpaste 6 | - | - | 13,30 |
| Aluminium-Effektpigment | - | 5,43 | - |
| Dipropylenglykol methyl ether | - | 5,08 | - |
| Rotes Pigment | - | - | 3,02 |
| Glimmer-Effektpigment | - | - | 2,46 |

### Beschichtungszusammensetzungen B1a-C1, B1b-C1 und B1c-C1

Zur Herstellung der erfindungsgemäßen Beschichtungszusammensetzungen B1a-C1, B1b-C1 und B1c-C1 werden dem wässrigen Basislack 1 2,5 Gew.-% (B1a), 5 Gew.-% (B1b) oder 7,5 Gew.-% (B1c), des Copolymeren 1, jeweils bezogen auf den gesamten Festkörpergehalt des wässrigen Basislacks 1, hinzugefügt und die resultierende Mischung mittels eines Laborrührers (260-1820 rpm) verrührt. Die Menge von 2,5 Gew.-%, 5 Gew.-% bzw. 7,5 Gew.-% an Copolymeren 1 bezieht sich dabei jeweils auf das Copolymer als solches, d.h. ist bezogen auf den Festkörpergehalt des Copolymeren 1 in der wässrigen Dispersion enthaltend das Copolymer 1, die wie unter Punkt **1.1** beschrieben erhalten wird.

### Beschichtungszusammensetzungen B1a-C2, B1b-C2 und B1c-C2

Zur Herstellung der erfindungsgemäßen Beschichtungszusammensetzungen B1a-C2, B1b-C2 und B1c-C2 werden dem wässrigen Basislack 1 2,5 Gew.-% (B1a), 5 Gew.-% (B1b) oder 7,5 Gew.-% (B1c), des Copolymeren 2, jeweils bezogen auf den gesamten Festkörpergehalt des wässrigen Basislacks 1, hinzugefügt und die resultierende Mischung mittels eines Laborrührers (260-1820 rpm) verrührt. Die Menge von 2,5 Gew.-%, 5 Gew.-% bzw. 7,5 Gew.-% an Copolymeren 2 bezieht sich dabei jeweils auf das Copolymer als solches, d.h. ist bezogen auf den Festkörpergehalt des Copolymeren 2 in der wässrigen Dispersion enthaltend das Copolymer 1, die wie unter Punkt **1.1** beschrieben erhalten wird.

### Beschichtungszusammensetzungen B2-C1 und B3-C1 sowie B2-C2 und B3-C2

Zur Herstellung der erfindungsgemäßen Beschichtungszusammensetzungen B2-C1 und B3-C1 werden dem wässrigen Basislack 2 5 Gew.-% des Copolymeren 1, jeweils bezogen auf den gesamten Festkörpergehalt des wässrigen Basislacks 2, hinzugefügt und die resultierende Mischung mittels eines Laborrührers (260-1820 rpm) verrührt. Zur Herstellung der erfindungsgemäßen Beschichtungszusammensetzungen B2-C2 und B3-C2 werden dem wässrigen Basislack 3 5 Gew.-% des Copolymeren 2, jeweils bezogen auf den gesamten Festkörpergehalt des wässrigen Basislacks 3, hinzugefügt und die resultierende Mischung mittels eines Laborrührers (260-1820 rpm) verrührt. Die Menge von 5 Gew.-% an Copolymeren 1 oder Copolymeren 2 bezieht sich dabei jeweils auf das Copolymer als solches, d.h. ist bezogen auf den Festkörpergehalt des Copolymeren 1 oder 2 in der wässrigen Dispersion enthaltend das Copolymer 1 oder 2, die wie unter Punkt **1.1** beschrieben erhalten wird.

### Beschichtungszusammensetzung B1-C3

Zur Herstellung der erfindungsgemäßen Beschichtungszusammensetzung B1-C3 wird dem wässrigen Basislack 1 5 Gew.-% des Copolymeren 3, jeweils bezogen auf den gesamten Festkörpergehalt des wässrigen Basislacks 1, hinzugefügt und die resultierende Mischung mittels eines Laborrührers (260-1820 rpm) verrührt.

### 1.4 Herstellung von Vergleichsbeschichtungszusammensetzungen

### V1 und V2 und V3

Als Vergleichsbeschichtungszusammensetzungen V1, V2 und V3 wird jeweils der (nicht additivierte) wässrige Basislack 1 (V1), der wässrige Basislack 2 (V2) und der wässrige Basislack 3 (V3) eingesetzt, d.h. jeweils ein solcher Basislack, der kein erfindungsgemäß eingesetztes Copolymer enthält.

### V4a und V4b

Zur Herstellung zweier Vergleichsbeschichtungszusammensetzungen V4a und V4b werden dem wässrigen Basislack 1 5 Gew.-% des Vergleichs-Copolymeren VC1 (V4a) oder des Vergleichs-Copolymeren VC2 (V4b), jeweils bezogen auf den gesamten Festkörpergehalt des wässrigen Basislacks 1, hinzugefügt und die resultierende Mischung mittels eines Laborrührers (260-1820 rpm) verrührt.

### V5a und V5b

Zur Herstellung zweier Vergleichsbeschichtungszusammensetzungen V5a und V5b werden dem wässrigen Basislack 1 2,5 Gew.-% (V5a) oder 5,0 Gew.-% (V5b) eines kommerziell erhältlichen Haftvermittlers (Hardlen NA 3002 der Firma Toyobo), jeweils bezogen auf den gesamten Festkörpergehalt des wässrigen Basislacks 1, hinzugefügt und die resultierende Mischung mittels eines Laborrührers (260-1820 rpm) verrührt. Die Menge an kommerziell erhältlichem Haftvermittler ist dabei bezogen auf den Festkörpergehalt des kommerziell erhältlichen Haftvermittlers. Bei Hardlen NA 3002 der Firma Toyobo handelt es sich um ein chloriertes Polyolefin.

### V6a und V6b

Zur Herstellung zweier Vergleichsbeschichtungszusammensetzungen V6a und V6b werden dem wässrigen Basislack 1 1,0 Gew.-% (V6a) oder 2,0 Gew.-% (V6b) eines kommerziell erhältlichen Haftvermittlers (Byk 4500 der Firma BYK Chemie), jeweils bezogen auf den gesamten Festkörpergehalt des wässrigen Basislacks 1, hinzugefügt und die resultierende Mischung mittels eines Laborrührers (260-1820 rpm) verrührt. Die Menge an kommerziell erhältlichem Haftvermittler ist dabei bezogen auf den Festkörpergehalt des kommerziell erhältlichen Haftvermittlers.

### 2. Herstellung von beschichteten Substraten mittels einer der erfindungsgemäßen Beschichtungszusammensetzungen oder einer Vergleichsbeschichtungszusammensetzung

Als Substrate werden verschiedene Kunststoffsubstrate, jeweils in Form von Testplatten mit einer Fläche von 10 cm x 10 cm x 0,3 cm eingesetzt. Als Kunststoffsubstrate werden Substrate aus Polypropylen (PP) (Substrat T1) oder mit Ethylen-Propylen-Dien-Mischpolymeren modifiziertem Polypropylen (PP-EPDM) (Substrat T2) eingesetzt. Die Substrate werden über eine Dauer von 2 Sekunden einer Beflammung unterworfen.

Auf das jeweilige eingesetzte Substrat wird pneumatisch eine erfindungsgemäße Beschichtungszusammensetzung B1a-C1, B1b-C1, B1c-C1, B1a-C2, B1b-C2, B1c-C2, B2-C1, B3-C1, B2-C2 oder B3-C2 oder B1-C3 oder eine der Vergleichsbeschichtungszusammensetzungen V1, V2, V3, V4a, V4b, V5a oder V5b oder V6a oder V6b appliziert. Die so applizierte jeweilige Basislackschicht wird für 10 Minuten bei Raumtemperatur (20-23°C) und anschließend für weitere 10 Minuten bei 80 °C im Umluftofen (Ofentemperatur) getrocknet (Zwischentrocknung).

Daraufhin wird auf jedes der so erhaltenen mit einer Basislackschicht beschichteten Kunststoffsubstrate ein Klarlack appliziert. Die Zusammensetzung des jeweils eingesetzten Klarlacks ist in nachstehender Tabelle 4 wiedergegeben. Dann erfolgt die gemeinsame Härtung des applizierten wässrigen Basislacks und des applizierten Klarlacks für 10 Minuten bei Raumtemperatur (20-23°C) und anschließend für 30 Minuten bei 80 °C im Umluftofen (Ofentemperatur). Die Basislackschicht weist jeweils eine Trockenfilmschichtdicke von 15 µm und die Klarlackschicht eine Trockenfilmschichtdicke von 35 µm auf.

**Tabelle 4: zur Herstellung des Klarlacks eingesetzte Komponenten**

| **Zur Herstellung des Klarlacks eingesetzte Komponenten** | **Menge [Gew.-%]** |
|---|---|
| Parocryl AC 30.3 (Lösemittelhaltiges Acrylatharz) | 50,93 |
| Setal 82166 SS-55 | 25,51 |
| Cyclohexanon | 3,91 |
| Solvent Naphtha 230/290 | 1,95 |
| Parocryl AC 30.3 (Lösemittelhaltiges Acrylatharz) | 9,78 |
| Disolucion de Silicona F-2 | 1,54 |
| Verlaufsmittel (5%-ige Lösung von Baysilon OL44) | 0,49 |
| Tinuvin 292 (handelsüblicher Lichtstabilisator) | 0,93 |
| Tinuvin 1130 (handelsüblicher UV-Absorber) | 0,93 |
| Katalysator (1%-ige Lösung von Dibutylzinndilaurat) | 0,59 |
| Cumylhydroperoxid (80-%-ig) | 0,39 |
| 1 -Methoxypropylacetat-2 | 3,05 |

Die Angabe in Gew.-% in Tabelle 4 im Zusammenhang mit jeder der Komponenten bezieht sich jeweils auf das Gesamtgewicht des Klarlacks.

Es werden so die mit einer der Beschichtungszusammensetzungen B1a-C1, B1b-C1, B1c-C1, B1a-C2, B1b-C2, B1c-C2, B2-C1, B3-C1, B2-C2, B3-C2, B1-C3, V1, V2, V3, V4a, V4b, V5a oder V5b, V6a oder V6b sowie dem Klarlack beschichteten Substrate T1 erhalten (beschichtete Substrate T1-B1a-C1, T1-B1b-C1, T1-B1c-C1, T1-B1a-C2, T1-B1b-C2, T1-B1c-C2, T1-B2-C1, T1-B3-C1, T1-B2-C2 und T1-B3-C2 und T1-B1-C3 sowie T1-V1, T1-V2 und T1-V3 sowie T1-V4a, T1-V4b, T1-V5a und T1-V5b sowie T1-V6a und T1-V6b).

Es werden zudem die mit einer der Beschichtungszusammensetzungen B1a-C1, B1b-C1, B1c-C1, B1a-C2, B1b-C2, B1c-C2, B2-C1, B3-C1, B2-C2, B3-C2, B1-C3, V1, V2, V3, V4a, V4b, V5a oder V5b, sowie dem Klarlack beschichteten Substrate T2 erhalten (beschichtete Substrate T2-B1a-C1, T2-B1b-C1, T2-B1c-C1, T2-B1a-C2, T2-B1b-C2, T2-B1c-C2, T2-B2-C1, T2-B3-C1, T2-B2-C2 und T2-B3-C2 und T2-B1-C3 sowie T2-V1, T2-V2 und T2-V3 sowie T2-V4a, T2-V4b, T2-V5a und T2-V5b).

Von jedem der unterschiedlichen beschichteten Substrate werden insgesamt 6 Proben hergestellt und jede Probe wie nachfolgend unter Punkt 3. beschrieben jeweils einzeln untersucht. Anschließend wird der jeweilige Mittelwert gebildet.

### 3. Untersuchung der Haftungseigenschaften der beschichteten Substrate

**3.1** Die Haftung zwischen der auf dem eingesetzten Substrat jeweils aufgetragenen Basislackschicht und dem Substrat selbst wird mittels der vorstehend beschriebenen Methode (ohne vorherige Lagerung des jeweiligen beschichteten Substrats unter Konstant-Klima-Bedingungen) für die in Tabelle 5 genannten beschichteten Substrate bestimmt und bewertet.

In Tabelle 5 sind die Ergebnisse zusammengefasst:
Wie aus Tabelle 5 ersichtlich ist, lässt sich durch Einsatz des erfindungsgemäßen Copolymeren 1 oder 2 oder 3 in der zur Herstellung einer Basislackschicht eingesetzten Beschichtungszusammensetzung eine signifikante Verbesserung der Haftung zum jeweiligen Substrat T1 oder T2 erzielen.

Insbesondere anhand der Vergleichsbeispiele T2-V4a und T2-V4b zeigt sich, dass die Haftung-vermittelnde Wirkung eines Vergleichs-Copolymeren nicht ausreichend ist, dessen Struktureinheit (S1) eine lineare Alkyl-Gruppe mit wenigstens 11 Kohlenstoffatomen aufweist oder eine zwar verzweigte Alkyl-Gruppe aufweist, die jedoch weniger als 11 Kohlenstoffatome aufweist.

**Tabelle 5:**

| **Beschichtetes Substrat** | **Bewertung der Haftung zwischen Basislackschicht und Substrat** |
|---|---|
| T1-V1 (Verqleich) | 4 |
| T1-B1a-C1 | **0,5** |
| T1-B1b-C1 | **0** |
| T1-B1c-C1 | **0** |
| T1-B1a-C2 | **0,5** |
| T1-B1b-C2 | **0** |
| T1-B1c-C2 | **0** |
| T1-B1-C3 | **1** |
| T2-V1 (Vergleich) | 5 |
| T2-V4a (Vergleich) | 4,5 |
| T2-V4b (Vergleich) | 3,5 |
| T2-B1a-C1 | **0** |
| T2-B1b-C1 | **0,5** |
| T2-B1c-C1 | **0** |
| T2-B1a-C2 | **0** |
| T2-B1b-C2 | **0** |
| T2-B1c-C2 | **0,5** |
| T2-B1-C3 | **2,5** |
| T1-V2 (Vergleich) | 3 |
| T1-B2-C1 | **0,5** |
| T1-B2-C2 | **0,5** |
| T1-V3 (Vergleich) | 4 |
| T1-B3-C1 | **0** |
| T1-B3-C2 | **0** |
| T2-V2 (Vergleich) | 4 |
| T2-B2-C1 | **0,5** |
| T2-B2-C2 | **0** |
| T2-V3 (Vergleich) | 4 |
| T2-B3-C1 | **0,5** |
| T2-B3-C2 | **0** |

**3.2** Die Haftung zwischen der auf dem eingesetzten Substrat jeweils aufgetragenen Basislackschicht und dem Substrat selbst wird zudem mittels der vorstehend beschriebenen Methode einschließlich vorheriger Lagerung des jeweiligen beschichteten Substrats unter den vorstehend beschriebenen Konstant-Klima-Bedingungen gemäß DIN EN ISO 6270-2 CH (Datum: September 2005) für die in Tabelle 6 genannten beschichteten Substrate bestimmt und bewertet:
In Tabelle 6 sind die Ergebnisse zusammengefasst:

**Tabelle 6:**

| **Beschichtetes Substrat** | **Bewertung der Haftung zwischen Basislackschicht und Substrat** |
|---|---|
| T1-V1 (Vergleich) | 3 |
| T1-V6a (Vergleich) | 4 |
| T1-V6b (Vergleich) | 4 |
| T1-V5a (Vergleich) | 5 |
| T1-V5b (Verqleich) | 4 |
| T1-B1a-C1 | **0** |
| T1-B1b-C1 | **1** |
| T1-B1c-C1 | **0** |
| T1-B1b-C2 | **0** |
| T1-B1c-C2 | **1** |
| T2-V1 (Vergleich) | 3 |
| T2-V5a (Vergleich) | 0 |
| T2-V5b (Verqleich) | 0 |
| T2-B1a-C1 | **0** |
| T2-B1b-C1 | **0** |
| T2-B1c-C1 | **0** |
| T2-B1b-C2 | **1** |
| T2-B1c-C2 | **1** |

Wie aus Tabelle 6 ersichtlich ist, lässt sich durch Einsatz des erfindungsgemäßen Copolymeren 1 oder 2 in der zur Herstellung einer Basislackschicht eingesetzten Beschichtungszusammensetzung eine signifikante Verbesserung der Haftung zum jeweiligen Substrat T1 oder T2 erzielen. Eine gute Haftung zu EPDM-PP (Substrat T2) kann zwar auch unter Einsatz der Beschichtungs-zusammensetzungen V5a und V5b erzielt werden, jedoch enthalten diese mit dem kommerziell erhältlichen Haftvermittler Hardlen NA 3002 chlorierte Polyolefine, was unter anderem aus ökologischen Gründen unerwünscht ist.

## Patentansprüche

1. Ein durch Copolymerisation von wenigstens drei jeweils voneinander verschiedenen ethylenisch ungesättigten Monomeren erhältliches Copolymer, **dadurch gekennzeichnet, dass**
das Copolymer wenigstens drei jeweils voneinander verschiedene Struktureinheiten (S1) und (S2) und (S3) aufweist, wobei
jede Struktureinheit (S1) wenigstens eine verzweigte Alkyl-Gruppe mit wenigstens 11 Kohlenstoffatomen aufweist,
jede Struktureinheit (S2) wenigstens eine über eine C₁₋₁₀-Alkylen-Gruppe gebundene Harnstoff-Gruppe der allgemeinen Formel (I) aufweist 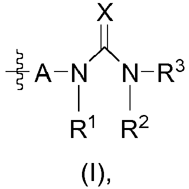 worin
X für O oder S steht,
A für eine C₁₋₁₀-Alkylen-Gruppe steht und
R¹, R² und R³ jeweils unabhängig voneinander für H oder einen C₁₋₁₀-Alkyl-Rest stehen oder
R¹ und R² gemeinsam für -(CR⁴R⁵)ₙ- stehen und R³ eine der vorstehenden Bedeutungen hat, wobei R⁴ und R⁵ jeweils unabhängig voneinander für H oder einen C₁₋₆-Alkyl-Rest stehen und der Parameter n für eine ganze Zahl im Bereich von 2 bis 5 steht,
und jede Struktureinheit (S3) wenigstens eine funktionelle Gruppe ausgewählt aus der Gruppe bestehend aus Carboxyl-Gruppen, Hydroxyl-Gruppen, Thiol-Gruppen, Amino-Gruppen und Epoxid-Gruppen sowie Mischungen davon aufweist.

2. Das Copolymer gemäß Anspruch 1, **dadurch gekennzeichnet, dass** die Struktureinheiten (S1), (S2) und (S3) durch Copolymerisation von Monomeren in das Copolymer eingeführt werden, die jeweils unabhängig voneinander wenigstens eine (Meth)acryl-Gruppe als ethylenisch ungesättigte Gruppe aufweisen.

3. Das Copolymer gemäß Anspruch 1 oder 2, **dadurch gekennzeichnet, dass**
jede Struktureinheit (S1) wenigstens eine verzweigte Alkyl-Gruppe mit wenigstens 13 Kohlenstoffatomen aufweist,
jede Struktureinheit (S2) wenigstens eine über eine C₁₋₆-Alkylen-Gruppe gebundene Harnstoff-Gruppe der allgemeinen Formel (I) aufweist 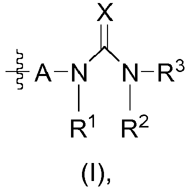 worin
X für O oder S steht,
A für eine C₁₋₆-Alkylen-Gruppe steht und
R¹ und R² gemeinsam für -(CR⁴R⁵)ₙ- stehen und R³ für H oder einen C₁₋₆-Alkyl-Rest steht, wobei R⁴ und R⁵ jeweils unabhängig voneinander für H oder einen C₁₋₆-Alkyl-Rest stehen, und der Parameter n für eine ganze Zahl im Bereich von 2 bis 5 steht,
und jede vorhandene Struktureinheit (S3) wenigstens eine funktionelle Gruppe ausgewählt aus der Gruppe bestehend aus Carboxyl-Gruppen und Hydroxyl-Gruppen sowie Mischungen davon aufweist.

4. Das Copolymer gemäß einem der vorstehenden Ansprüche, **dadurch gekennzeichnet, dass** das Copolymer wenigstens eine weitere von (S1) und (S2) sowie von (S3) verschiedene Struktureinheit (S4) aufweist, wobei jede Struktureinheit (S4) wenigstens eine Gruppe ausgewählt aus der Gruppe bestehend aus verzweigten und unverzweigten C₁₋₁₀-Alkyl-Gruppen, gegebenenfalls mit wenigstens einer C₁₋₆-Alkyl-Gruppe substituierten C₃₋₁₀-Cycloalkyl-Gruppen, gegebenenfalls mit wenigstens einer C₁₋₆-Alkyl-Gruppe substituierten aromatischen Gruppen, über eine C₁₋₆-Alkylen-Gruppe gebundenen gegebenenfalls mit wenigstens einer C₁₋₆-Alkyl-Gruppe substituierten aromatischen Gruppen und über eine C₁₋₆-Alkylen-Gruppe gebundenen gegebenenfalls mit wenigstens einer C₁₋₆-Alkyl-Gruppe substituierten C₃₋₁₀-Cycloalkyl-Gruppen, aufweist.

5. Das Copolymer gemäß einem der vorstehenden Ansprüche, **dadurch gekennzeichnet, dass** das Copolymer erhältlich ist durch radikalische Copolymerisation von
(s1) wenigstens einem zur Ausbildung der Struktureinheit (S1) befähigten ethylenisch ungesättigten Monomeren in einer Menge in einem Bereich von 0,5 bis 15 mol-%, bezogen auf die Gesamtmenge aller zur Herstellung des Copolymeren eingesetzten Monomere in mol-%,
(s2) wenigstens einem zur Ausbildung der Struktureinheit (S2) befähigten ethylenisch ungesättigten Monomeren in einer Menge in einem Bereich von 0,5 bis 15 mol-%, bezogen auf die Gesamtmenge aller zur Herstellung des Copolymeren eingesetzten Monomere in mol-%,
(s3) wenigstens einem zur Ausbildung der Struktureinheit (S3) befähigten ethylenisch ungesättigten Monomeren in einer Menge in einem Bereich von 5 bis 50 mol-%, bezogen auf die Gesamtmenge aller zur Herstellung des Copolymeren eingesetzten Monomere in mol-%, und
(s4) wenigstens einem zur Ausbildung der Struktureinheit (S4) befähigten ethylenisch ungesättigten Monomeren in einer Menge in einem Bereich von 20 bis 90 mol-%, bezogen auf die Gesamtmenge aller zur Herstellung des Copolymeren eingesetzten Monomere in mol-%,
wobei sich die Gesamtmenge aller zur Herstellung des Copolymeren eingesetzten Monomere (s1), (s2), (s3) und (s4) insgesamt auf 100 mol-% addiert.

6. Eine Verwendung wenigstens eines Copolymeren gemäß einem der vorstehenden Ansprüche als Haftungs-vermittelndes Additiv in einer wässrigen Beschichtungszusammensetzung, die zur zumindest teilweisen Beschichtung eines Substrats mit einer Basislackschicht geeignet ist.

7. Die Verwendung gemäß Anspruch 6, **dadurch gekennzeichnet, dass** als Substrat ein Substrat aus oder basierend auf wenigstens einem Kunststoff eingesetzt wird.

8. Eine wässrige Beschichtungszusammensetzung umfassend
wenigstens ein polymeres Harz (A1) und gegebenenfalls wenigstens ein Vernetzungsmittel (A2),
wenigstens ein Pigment (B) und
wenigstens ein von dem polymeren Harz (A1) verschiedenes und als Haftungs-vermittelndes Additiv eingesetztes Copolymer gemäß einem der Ansprüche 1 bis 5 als Komponente (C)
zur zumindest teilweisen Beschichtung eines Substrats mit einer Basislackschicht.

9. Die Beschichtungszusammensetzung gemäß Anspruch 8, **dadurch gekennzeichnet, dass** die Beschichtungszusammensetzung das als Haftungs-vermittelndes Additiv eingesetzte Copolymer (C) in einer Menge in einem Bereich von 0,5 bis 15 Gew.-%, bezogen auf den gesamten Festkörperanteil der Beschichtungszusammensetzung, enthält.

10. Die Beschichtungszusammensetzung gemäß Anspruch 8 oder 9, **dadurch gekennzeichnet, dass** das polymere Harz (A1) ausgewählt ist aus der Gruppe bestehend aus jeweils funktionelle Hydroxyl-Gruppen aufweisenden Polyurethanen, Polyestern, Epoxidharzen und Poly(meth)acrylaten sowie Mischungen davon, und das gegebenenfalls vorhandene Vernetzungsmittel (A2) wenigstens ein gegebenenfalls alkyliertes Melamin-Formaldehyd-Kondensationsprodukt und/oder wenigstens ein blockiertes Polyisocyanat umfasst.

11. Die Beschichtungszusammensetzung gemäß einem der Ansprüche 8 bis 10, **dadurch gekennzeichnet, dass** die Beschichtungszusammensetzung
das wenigstens eine polymere Harz (A1) in einer Menge in einem Bereich von 7,5 bis 30 Gew.-%, bezogen auf das Gesamtgewicht der Beschichtungszusammensetzung,
das gegebenenfalls vorhandene wenigstens eine Vernetzungsmittel (A2) in einer Menge in einem Bereich von 2,5 bis 15 Gew.-%, bezogen auf das Gesamtgewicht der Beschichtungszusammensetzung, und
das wenigstens eine Pigment (B) in einer Menge in einem Bereich von 0,5 bis 20 Gew.-%, bezogen auf das Gesamtgewicht der Beschichtungszusammensetzung, enthält,
wobei sich die Mengen der in der Beschichtungszusammensetzung enthaltenen Komponenten Wasser, (A1), (B), (C) sowie gegebenenfalls wenigstens einer weiteren darin enthaltener Komponente (D), (A2), und/oder gegebenenfalls darin enthaltener organischer Lösemittel auf insgesamt 100 Gew.-% addieren.

12. Ein Verfahren zur zumindest teilweisen Beschichtung eines Substrats mit einer Basislackschicht umfassend wenigstens einen Schritt (1),
(1) zumindest teilweises Kontaktieren des Substrats mit der Beschichtungszusammensetzung gemäß einem der Ansprüche 8 bis 11.

13. Eine Verfahren zur zumindest teilweisen Beschichtung eines Substrats mit einer Mehrschichtlackierung umfassend wenigstens die Schritte
(1) zumindest teilweises Kontaktieren des Substrats mit der Beschichtungszusammensetzung gemäß einem der Ansprüche 8 bis 11 zum zumindest teilweisem Aufbringen einer Basislackschicht auf das Substrat und
(2) Aufbringen einer Klarlackschicht auf die nach Schritt (1) aufgebrachte Basislackschicht.

14. Eine Basislackschicht erhältlich nach dem Verfahren gemäß Anspruch 12 oder eine Mehrschichtlackierung erhältlich nach dem Verfahren gemäß Anspruch 13.

15. Ein zumindest teilweise wenigstens mit der Beschichtungszusammensetzung gemäß einem der Ansprüche 8 bis 11 oder mittels des Verfahrens gemäß Anspruch 12 oder 13 beschichtetes Substrat.

## Claims

1. Copolymer obtainable by copolymerization of at least three ethylenically unsaturated monomers each different from one another, **characterized in that**
the copolymer has at least three structural units (S1) and (S2) and (S3) each different from one another, where
each structural unit (S1) has at least one branched alkyl group having at least 11 carbon atoms,
each structural unit (S2) has at least one urea group bonded via a C₁₋₁₀ alkylene group, of the general formula (I) 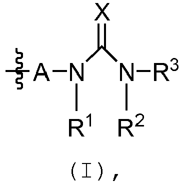 in which
X is O or S,
A is a C₁₋₁₀ alkylene group, and
R¹, R² and R³ each independently of one another are H or a C₁₋₁₀ alkyl radical, or
R¹ and R² together are - (CR⁴R⁵)ₙ- and R³ has one of the above definitions, where R⁴ and R⁵ each independently of one another are H or a C₁₋₆ alkyl radical, and the parameter n stands for an integer in the range from 2 to 5,
and each structural unit (S3) has at least one functional group selected from the group consisting of carboxyl groups, hydroxyl groups, thiol groups, amino groups, and epoxide groups, and also mixtures thereof.

2. Copolymer according to Claim 1, **characterized in that** the structural units (S1), (S2) and (S3) are introduced into the copolymer by copolymerization of monomers which each independently of one another have at least one (meth)acryloyl group as ethylenically unsaturated group.

3. Copolymer according to Claim 1 or 2, **characterized in that**
each structural unit (S1) has at least one branched alkyl group having at least 13 carbon atoms,
each structural unit (S2) has at least one urea group bonded via a C₁₋₆ alkylene group, of the general formula (I) 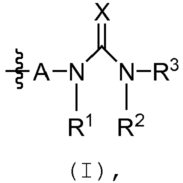 in which
X is O or S,
A is a C₁₋₆ alkylene group, and
R¹ and R² together are -(CR⁴R⁵) ₙ- and R³ is H or a C₁₋₆ alkyl radical, where R⁴ and R⁵ each independently of one another are H or a C₁₋₆ alkyl radical, and the parameter n stands for an integer in the range from 2 to 5,
and each structural unit (S3) present has at least one functional group selected from the group consisting of carboxyl groups and hydroxyl groups, and also mixtures thereof.

4. Copolymer according to any of the preceding claims, **characterized in that** the copolymer has at least one further structural unit (S4) different from (S1) and (S2) and also from (S3), with each structural unit (S4) having at least one group selected from the group consisting of branched and unbranched C₁₋₁₀ alkyl groups, C₃₋₁₀ cycloalkyl groups optionally substituted by at least one C₁₋₆ alkyl group, aromatic groups optionally substituted by at least one C₁₋₆ alkyl group, aromatic groups bonded via a C₁₋₆ alkylene group and optionally substituted by at least one C₁₋₆ alkyl group, and C₃₋₁₀ cycloalkyl groups bonded via a C₁₋₆ alkylene group and optionally substituted by at least one C₁₋₆ alkyl group.

5. Copolymer according to any of the preceding claims, **characterized in that** the copolymer is obtainable by radical copolymerization of
(s1) at least one ethylenically unsaturated monomer capable of forming the structural unit (S1), in an amount in a range from 0.5 to 15 mol%, based on the total amount in mol% of all monomers used for preparing the copolymer,
(s2) at least one ethylenically unsaturated monomer capable of forming the structural unit (S2), in an amount in a range from 0.5 to 15 mol%, based on the total amount in mol% of all monomers used for preparing the copolymer,
(s3) at least one ethylenically unsaturated monomer capable of forming the structural unit (S3), in an amount in a range from 5 to 50 mol%, based on the total amount in mol% of all monomers used for preparing the copolymer, and
(s4) at least one ethylenically unsaturated monomer capable of forming the structural unit (S4), in an amount in a range from 20 to 90 mol%, based on the total amount in mol% of all monomers used for preparing the copolymer,
with the total amount of all monomers (s1), (s2), (s3) and (s4) used for preparing the copolymer adding up in total to 100 mol%.

6. Use of at least one copolymer according to any of the preceding claims as adhesion-promoting additive in an aqueous coating composition suitable for at least partly coating a substrate with a basecoat.

7. Use according to Claim 6, **characterized in that** said substrate used is a substrate composed of or based on at least one plastic.

8. Aqueous coating composition comprising
at least one polymeric resin (A1) and optionally at least one crosslinking agent (A2),
at least one pigment (B), and
at least one copolymer different from the polymeric resin (A1) and used as adhesion-promoting additive, according to any of Claims 1 to 5, as component (C)
for at least partly coating a substrate with a basecoat.

9. Coating composition according to Claim 8, **characterized in that** the coating composition comprises the copolymer (C) used as adhesion-promoting additive in an amount in a range from 0.5 to 15 wt%, based on the total solids fraction of the coating composition.

10. Coating composition according to Claim 8 or 9, **characterized in that** the polymeric resin (A1) is selected from the group consisting of polyurethanes, polyesters, epoxy resins, and poly(meth)acrylates, each having functional hydroxyl groups, and also mixtures thereof, and the crosslinking agent (A2) optionally present comprises at least one optionally alkylated melamine-formaldehyde condensation product and/or at least one blocked polyisocyanate.

11. Coating composition according to any of Claims 8 to 10, **characterized in that** the coating composition comprises
the at least one polymeric resin (A1) in an amount in a range from 7.5 to 30 wt%, based on the total weight of the coating composition,
the optionally present at least one crosslinking agent (A2) in an amount in a range from 2.5 to 15 wt%, based on the total weight of the coating composition, and
the at least one pigment (B) in an amount in a range from 0.5 to 20 wt%, based on the total weight of the coating composition,
and the amounts of the water, (A1), (B), and (C) components present in the coating composition, and also of optionally at least one further component present therein, (D), (A2), and/or optionally of organic solvents present therein add up to a total of 100 wt%.

12. Method for at least partly coating a substrate with a basecoat, comprising at least a step (1) of
(1) at least partly contacting the substrate with the coating composition according to any of Claims 8 to 11.

13. Method for at least partly coating a substrate with a multicoat paint system, comprising at least the steps of
(1) at least partly contacting the substrate with the coating composition according to any of Claims 8 to 11 for at least partly applying a basecoat to the substrate, and
(2) applying a clearcoat to the basecoat applied by step (1).

14. Basecoat obtainable by the method according to Claim 12, or a multicoat paint system obtainable by the method according to Claim 13.

15. Substrate coated at least partly at least with the coating composition according to any of Claims 8 to 11 or by means of the method according to Claim 12 or 13.

## Revendications

1. Copolymère pouvant être obtenu par copolymérisation d'au moins trois monomères éthyléniquement insaturés chacun différents les uns des autres, **caractérisé en ce que**
le copolymère comprend au moins trois unités structurales (S1) et (S2) et (S3) chacune différentes les unes des autres,
chaque unité structurale (S1) comprenant au moins un groupe alkyle ramifié contenant au moins 11 atomes de carbone,
chaque unité structurale (S2) comprenant au moins un groupe urée de formule générale (I) relié par un groupe alkylène en C₁₋₁₀ 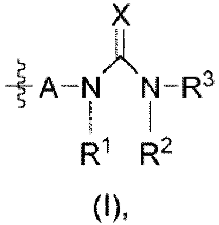 dans laquelle
X représente O ou S,
A représente un groupe alkylène en C₁₋₁₀ et
R¹, R² et R³ représentent chacun indépendamment les uns des autres H ou un radical alkyle en C₁₋₁₀, ou
R¹ et R² représentent ensemble - (CR⁴R⁵) ₙ- et R³ a une des significations précédentes, R⁴ et R⁵ représentant chacun indépendamment l'un de l'autre H ou un radical alkyle en C₁₋₆, et le paramètre n représentant un nombre entier dans la plage allant de 2 à 5,
et chaque unité structurale (S3) comprenant au moins un groupe fonctionnel choisi dans le groupe constitué par les groupes carboxyle, les groupes hydroxyle, les groupes thiol, les groupes amino et les groupes époxyde, ainsi que leurs mélanges.

2. Copolymère selon la revendication 1, **caractérisé en ce que** les unités structurales (S1), (S2) et (S3) sont introduites dans le copolymère par copolymérisation de monomères, qui comprennent chacun indépendamment les uns des autres au moins un groupe (méth)acrylique en tant que groupe éthyléniquement insaturé.

3. Copolymère selon la revendication 1 ou 2, **caractérisé en ce que**
chaque unité structurale (S1) comprend au moins un groupe alkyle ramifié contenant au moins 13 atomes de carbone, chaque unité structurale (S2) comprend au moins un groupe urée de formule générale (I) relié par un groupe alkylène en C₁₋₆ 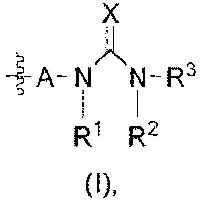 dans laquelle
X représente O ou S,
A représente un groupe alkylène en C₁₋₆ et
R¹ et R² représentent ensemble -(CR⁴R⁵)ₙ- et R³ représente H ou un radical alkyle en C₁₋₆, R⁴ et R⁵ représentant chacun indépendamment l'un de l'autre H ou un radical alkyle en C₁₋₆, et le paramètre n représentant un nombre entier dans la plage allant de 2 à 5,
et chaque unité structurale (S3) présente comprend au moins un groupe fonctionnel choisi dans le groupe constitué par les groupes carboxyle et les groupes hydroxyle, ainsi que leurs mélanges.

4. Copolymère selon l'une quelconque des revendications précédentes, **caractérisé en ce que** le copolymère comprend au moins une unité structurale (S4) supplémentaire différente de (S1) et (S2), ainsi que de (S3), chaque unité structurale (S4) comprenant au moins un groupe choisi dans le groupe constitué par les groupes alkyle en C₁₋₁₀ ramifiés et non ramifiés, les groupes cycloalkyle en C₃₋₁₀ éventuellement substitués avec au moins un groupe alkyle en C₁₋₆, les groupes aromatiques éventuellement substitués avec au moins un groupe alkyle en C₁₋₆, les groupes aromatiques reliés par un groupe alkylène en C₁₋₆, éventuellement substitués avec au moins un groupe alkyle en C₁₋₆, et les groupes cycloalkyle en C₃₋₁₀ reliés par un groupe alkylène en C₁₋₆, éventuellement substitués avec au moins un groupe alkyle en C₁₋₆.

5. Copolymère selon l'une quelconque des revendications précédentes, **caractérisé en ce que** le copolymère peut être obtenu par copolymérisation radicalaire de
(s1) au moins un monomère éthyléniquement insaturé apte à la formation de l'unité structurale (S1) en une quantité dans une plage allant de 0,5 à 15 % en moles, par rapport à la quantité totale de tous les monomères utilisés pour la fabrication du copolymère en % en moles,
(s2) au moins un monomère éthyléniquement insaturé apte à la formation de l'unité structurale (S2) en une quantité dans une plage allant de 0,5 à 15 % en moles, par rapport à la quantité totale de tous les monomères utilisés pour la fabrication du copolymère en % en moles,
(s3) au moins un monomère éthyléniquement insaturé apte à la formation de l'unité structurale (S3) en une quantité dans une plage allant de 5 à 50 % en moles, par rapport à la quantité totale de tous les monomères utilisés pour la fabrication du copolymère en % en moles, et
(s4) au moins un monomère éthyléniquement insaturé apte à la formation de l'unité structurale (S4) en une quantité dans une plage allant de 20 à 90 % en moles, par rapport à la quantité totale de tous les monomères utilisés pour la fabrication du copolymère en % en moles, la quantité totale de tous les monomères (s1), (s2), (s3) et (s4) utilisés pour la fabrication du copolymère étant au total de 100 % en moles.

6. Utilisation d'au moins un copolymère selon l'une quelconque des revendications précédentes en tant qu'additif promoteur d'adhésion dans une composition de revêtement aqueuse, qui est appropriée pour le revêtement au moins partiel d'un substrat avec une couche de vernis de base.

7. Utilisation selon la revendication 6, **caractérisée en ce qu'**un substrat constitué par ou à base d'au moins un plastique est utilisé en tant que substrat.

8. Composition de revêtement aqueuse, comprenant :
au moins une résine polymère (A1) et éventuellement au moins un agent de réticulation (A2),
au moins un pigment (B) et
au moins un copolymère selon l'une quelconque des revendications 1 à 5 différent de la résine polymère (A1) et utilisé en tant qu'additif promoteur d'adhésion en tant que composant (C),
pour le revêtement au moins partiel d'un substrat avec une couche de vernis de base.

9. Composition de revêtement selon la revendication 8, **caractérisée en ce que** la composition de revêtement contient le copolymère (C) utilisé en tant qu'additif promoteur d'adhésion en une quantité dans une plage allant de 0,5 à 15 % en poids, par rapport à la teneur en solides totale de la composition de revêtement.

10. Composition de revêtement selon la revendication 8 ou 9, **caractérisée en ce que** la résine polymère (A1) est choisie dans le groupe constitué par les polyuréthanes, les polyesters, les résines époxydes et les poly(méth)acrylates comprenant chacun des groupes hydroxyle fonctionnels, et leurs mélanges, et l'agent de réticulation éventuellement présent (A2) comprend au moins un produit de condensation mélamine-formaldéhyde éventuellement alkylé et/ou au moins un polyisocyanate bloqué.

11. Composition de revêtement selon l'une quelconque des revendications 8 à 10, **caractérisée en ce que** la composition de revêtement contient :
ladite au moins une résine polymère (A1) en une quantité dans une plage allant de 7,5 à 30 % en poids, par rapport au poids total de la composition de revêtement,
ledit au moins un agent de réticulation éventuellement présent (A2) en une quantité dans une plage allant de 2,5 à 15 % en poids, par rapport au poids total de la composition de revêtement, et
ledit au moins un pigment (B) en une quantité dans une plage allant de 0,5 à 20 % en poids, par rapport au poids total de la composition de revêtement,
la somme des quantités des composants eau, (A1), (B), (C) contenus dans la composition de revêtement, ainsi qu'éventuellement d'au moins un composant (D), (A2) en outre contenu dans celle-ci et/ou d'un solvant organique éventuellement contenu dans celle-ci étant au total de 100 % en poids.

12. Procédé de revêtement au moins partiel d'un substrat avec une couche de vernis de base, comprenant au moins une étape (1) :
(1) la mise en contact au moins partielle du substrat avec la composition de revêtement selon l'une quelconque des revendications 8 à 11.

13. Procédé de revêtement au moins partiel d'un substrat avec un vernissage multicouche, comprenant au moins les étapes suivantes :
(1) la mise en contact au moins partielle du substrat avec la composition de revêtement selon l'une quelconque des revendications 8 à 11 pour l'application au moins partielle d'une couche de vernis de base sur le substrat, et
(2) l'application d'une couche de vernis transparent sur la couche de vernis de base appliquée selon l'étape (1).

14. Couche de vernis de base pouvant être obtenue par le procédé selon la revendication 12 ou vernissage multicouche pouvant être obtenu par le procédé selon la revendication 13.

15. Substrat au moins partiellement revêtu avec au moins la composition de revêtement selon l'une quelconque des revendications 8 à 11 ou au moyen du procédé selon la revendication 12 ou 13.
